# EUROPEAN PATENT APPLICATION

(11) **EP 4 712 191 A1**
(43) Date of publication of application: **18.03.2026**
(21) Application number: 24803795.4
(22) Date of filing: 13.05.2024
(51) Int. Cl.: H01M 10/0567, H01M 10/0525

(54) **COMPOUND FOR ELECTROLYTE, COMPOUND FOR ELECTROLYTE ADDITIVE, ELECTROLYTE MATERIAL, ELECTROLYTE ADDITIVE, ELECTROLYTE FOR SECONDARY BATTERY, AND SECONDARY BATTERY**

(30) Priority: 11.05.2023 KR 20230061367; 06.09.2023 KR 20230118394; 10.05.2024 KR 20240061916
(71) Applicant: SFC Co., Ltd., Cheongju-si, Chungcheongbuk-do 28122 (KR)
(72) Inventor: JE, Jong Tae, Cheongju-si, Chungcheongbuk-do 28122 (KR); KIM, Ki Suk, Chungju-si, Chungcheongbuk-do 27461 (KR)
(74) Representative: WSL Patentanwälte Partnerschaft mbB
(86) International application number: PCT/KR2024/006491
(87) International publication number: WO 2024/232742

(57) **Abstract**

The present disclosure relates to a compound for an electrolyte solution, a compound for an electrolyte solution additive, an electrolyte solution material, an electrolyte solution additive, an electrolyte solution for a secondary battery, and a secondary battery, and provides an electrolyte solution for a secondary battery, including a novel compound, or an isomer thereof.

## Description

### Technical Field

The present disclosure relates to a compound for an electrolyte solution, a compound for an electrolyte solution additive, an electrolyte solution material, an electrolyte solution additive, an electrolyte solution for a secondary battery, and a secondary battery.

### Background Art

Lithium secondary batteries are used as a driving power source for portable electronic devices such as video cameras, mobile phones, and laptop computers. Rechargeable lithium secondary batteries have an energy density per unit weight that is three times or more higher than that of conventional lead-acid batteries, nickel-cadmium batteries, nickel-metal hydride batteries, and nickelzinc batteries, and are capable of high-speed charging.

Since lithium secondary batteries operate at a high operating voltage, an aqueous electrolyte solution, which is highly reactive with lithium, cannot be used. As an electrolyte for lithium secondary batteries, an organic electrolyte solution is generally used. An organic electrolyte solution is prepared by dissolving a lithium salt in an organic solvent. It is desirable for the organic solvent to be stable at high voltage, have high ionic conductivity and a high dielectric constant, and have low viscosity.

Meanwhile, the voltage, life, capacity, stability, etc., of the battery can vary greatly depending on what materials are used for the anode, the cathode, and the electrolyte. Therefore, there is a need for an electrolyte solution for a lithium secondary battery that can provide a lithium secondary battery having improved life characteristics and high-temperature stability.

### Disclosure of Invention

### Technical Problem

One object of the present disclosure is to provide an electrolyte solution for a secondary battery, including a novel compound, or an isomer thereof.

Another object of the present disclosure is to provide a secondary battery including the electrolyte solution for a secondary battery.

### Solution to Problem

To achieve the above objects, an embodiment of the present disclosure provides an electrolyte solution for a secondary battery, including a compound represented by Formula 1, or an isomer thereof.

An electrolyte solution for a secondary battery, comprising a compound represented by Formula 1, or an isomer thereof:

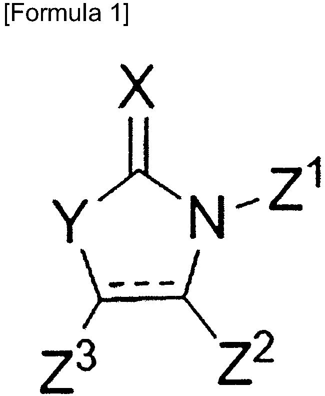

In Formula 1, carbon in the ring is linked by a single bond or a double bond;
X is oxygen or sulfur;
Y is oxygen or sulfur;
Z¹, Z², and Z³ are each independently selected from the group consisting of hydrogen, substituted or unsubstituted C₁₋₁₀ alkyl, substituted or unsubstituted C₁₋₁₀ alkenyl, substituted or unsubstituted C₁₋₁₀ amine, substituted or unsubstituted C₁₋₁₀ acyl, substituted or unsubstituted C₁₋₁₀ alkynyl, substituted or unsubstituted C₃₋₁₀ cycloalkyl, substituted or unsubstituted silyl, substituted or unsubstituted C₁₋₁₀ alkoxy, substituted or unsubstituted C₁₋₁₂ heteroalkyl, substituted or unsubstituted C₁₋₆ heterocycloalkyl, -SO₂R¹, -P(=G)(OR¹)₂, and - P(=G)(R¹)₂;
Z¹ and Z² may or may not be bonded to each other to form a ring;
G is oxygen or sulfur; and
R¹ may be substituted or unsubstituted C₁₋₆ alkyl, C₂₋₆ alkenyl, C₂₋₆ alkynyl, or C₆₋₂₀ aryl.

In an embodiment of the present disclosure, the substituted alkyl, alkenyl, amine, acyl, alkynyl, cycloalkyl, silyl, alkoxy, heteroalkyl, and heterocycloalkyl may each independently be substituted with one or more substituents selected from the group consisting of alkoxy group, alkynyloxy group, heteroaryl group, alkenyl group, heterocycloalkyl group, carbonyl group, halogen group, hydroxyl group, alkenyloxy group, carboxyl group, carbonate group, alkyl group, alkynyl group, amine group, cycloalkyl group, silyl group, sulfonate group, phosphate group, thiophosphate group, nitro group, cyano group, heteroalkyl group, cycloalkyl group, aryl group, and ether group.

In an embodiment of the present disclosure, the electrolyte solution may further include one or more additives selected from the group consisting of LiPO₂F₂, unsaturated cyclic carbonate, cyclic sultone, cyclic sulfate lactone, nitrile compound, and mixtures thereof.

In an embodiment of the present disclosure, the unsaturated cyclic carbonate may be selected from the group consisting of vinylene carbonate, phenyl carbonate, vinyl carbonate, and allyl carbonate.

In an embodiment of the present disclosure, the electrolyte solution may further include an organic solvent.

Another aspect of the present disclosure provides a lithium-ion battery including the non-aqueous electrolyte solution for a secondary battery.

In an embodiment of the present disclosure, the secondary battery may include: an electrode assembly including a cathode, an anode, and a separator separating the cathode and the anode; a case housing the electrode assembly; and the electrolyte solution housed in the case and immersing the electrode assembly.

### Advantageous Effects of Invention

A secondary battery including the electrolyte solution additive and the electrolyte solution for a secondary battery according to the present disclosure may exhibit improved room-temperature cycle performance.

### Brief Description of Drawings

FIG. 1 is a cross-sectional view of a secondary battery including an electrolyte solution and an electrolyte solution additive according to an embodiment of the present disclosure.
FIGS. 2 to 5 illustrate the results of analysis of room-temperature cycle performance of a secondary battery according to an embodiment of the present disclosure.

### <Explanation Of Reference Numerals Designating The Major Elements Of The Drawings>

1: Secondary battery
10: Upper case
20: Spring
30: Spacer
40: Cathode
50: Separator
60: Anode

### Best Mode for Carrying out the Invention

An embodiment of the present disclosure is illustrated in the accompanying drawings. However, the inventive concept may be embodied in many other forms and should not be construed as limited to the examples described in the present specification. Rather, these examples are provided so that the present disclosure may be thorough and complete and so that those of ordinary skill in the art may fully understand the scope of the inventive concept. The same reference numerals denote identical components.

The terminology used herein is for the purpose of describing particular examples only and is not intended to limit the inventive concept. The singular forms used herein are intended to include plural forms encompassing "at least one," unless the context clearly indicates otherwise. The phrase "at least one" must not be construed as limiting to the singular. As used in the present specification, the term "and/or" encompasses any and all combinations of one or more items in the listed elements. The terms "comprises" and/or "comprising" as used in the detailed description specify the presence of the stated features, regions, integers, steps, operations, components, and/or elements, and do not preclude the presence or addition of one or more other features, regions, integers, steps, operations, components, elements, and/or groups thereof.

Unless otherwise defined, all terms (including technical and scientific terms) used in the present specification have the same meanings as those commonly understood by one of ordinary skill in the art to which the present disclosure pertains. Terms defined in generally used dictionaries should be interpreted as having meanings consistent with the context of the relevant art and the present disclosure and should not be interpreted in an idealized or excessively formal sense.

Although specific examples have been described, alternatives, modifications, variations, improvements, and substantial equivalents that are not currently or reasonably foreseeable may occur to the applicant or to those skilled in the art. Accordingly, the appended claims, which may be filed and amended, are intended to encompass all such alternatives, modifications, variations, improvements, and substantial equivalents.

In the present disclosure, the term "isomer" refers to a compound of the present disclosure, or a salt thereof, having the same chemical or molecular formula but being structurally or stereochemically different. Such isomers include structural isomers, such as tautomers, and stereoisomers, such as R or S isomers having an asymmetric carbon center, geometric isomers (trans, cis), and enantiomers. All such isomers and mixtures thereof are also included within the scope of the present disclosure.

In the present disclosure, the term "alkyl", unless otherwise specified, may be straight-chain or branched-chain, and the number of carbon atoms is not particularly limited, but may be 1 to 7. Specific examples of the alkyl group include, but are not limited to, methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, and n-heptyl.

In the present specification, the term "alkenyl", unless otherwise specified, may be straight-chain or branched-chain, and may mean an alkyl group including one or more double bonds. The number of carbon atoms is not particularly limited, but may be 2 to 6. Specific examples include, but are not limited to, vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, and the like.

In the present specification, the term "alkynyl", unless otherwise specified, may be straight-chain or branched-chain, and may mean an alkyl group including one or more triple bonds. The number of carbon atoms is not particularly limited, but may be 2 to 6. Specific examples include, but are not limited to, ethynyl group, propynyl group, butynyl group, pentynyl group, and the like.

In the present specification, the term "amine" may be selected from the group consisting of -NH₂, alkylamine group, N-alkylarylamine group, arylamine group, N-arylheteroarylamine group, N-alkylheteroarylamine group, and heteroarylamine group, and the number of carbon atoms is not particularly limited, but may be 1 to 30. More specific examples of the amine group include, but are not limited to, methylamine group, dimethylamine group, ethylamine group, diethylamine group, phenylamine group, naphthylamine group, biphenylamine group, anthracenylamine group, 9-methyl-anthracenylamine group, diphenylamine group, ditolylamine group, N-phenyltolylamine group, triphenylamine group, N-phenylbiphenylamine group, N-phenylnaphthylamine group, N-biphenylnaphthylamine group; N-naphthylfluorenylamine group, N-phenylphenanthrenylamine group, N-biphenylphenanthrenylamine group, N-phenylfluorenylamine group, N-phenylterphenylamine group, N-phenanthrenylfluorenylamine group, and N-biphenylfluorenylamine group.

In the present specification, the term "heteroalkyl" refers to an alkyl group including one or more heteroatoms selected from O, N, Si, B, Se, P, and S, and the number of carbon atoms is not particularly limited, but may be 1 to 6. Examples of the heteroalkyl include, but are not limited to, -CH₂-CH₂-O-CH₃, - CH₂-CH₂-NH-CH₃, -CH₂-CH₂-N(CH₃)-CH₃, -CH₂-S-CH₂-CH₃, and the like.

In the present specification, the term "cycloalkyl" refers to a non-aromatic carbon ring, and the number of carbon atoms is not particularly limited, but may be 3 to 12. Examples of the cycloalkyl include, but are not limited to, cyclopropyl, cyclobutyl, cyclopentyl, cyclohexyl, cycloheptyl, cyclooctyl, cyclononyl, cyclodecyl, and the like.

In the present specification, the term "heterocycloalkyl" refers to a cycloalkyl group including one or more heteroatoms selected from O, N, Si, B, Se, P, and S, and the number of carbon atoms is not particularly limited, but may be 3 to 12. Examples of the heterocycloalkyl include, but are not limited to, epoxy, tetrahydrofuranyl, tetrahydropyranyl, tetrahydrothiophenyl, tetrahydropyrrolyl, and the like.

In the present specification, the term "aryl" is not particularly limited, but the number of carbon atoms may be 6 to 20; or 6 to 12. Examples of the aryl group as a monocyclic aryl group include, but are not limited to, phenyl group, biphenyl group, terphenyl group, and the like. Examples of the aryl group as a polycyclic aryl group include, but are not limited to, naphthyl group, anthracenyl group, phenanthrenyl group, pyrenyl group, perylenyl group, chrysenyl group, fluorenyl group, and the like.

In the present specification, the term "heteroaryl" refers to an aryl group including one or more heteroatoms selected from O, N, Si, B, Se, P, and S, and the number of carbon atoms is not particularly limited, but may be 5 to 20. Examples of the heteroaryl include, but are not limited to, xanthene, thioxanthen, thiophene group, furan group, pyrrole group, imidazole group, thiazole group, oxazole group, oxadiazole group, triazole group, pyridyl group, bipyridyl group, pyrimidyl group, triazine group, acridyl group, pyridazine group, pyrazinyl group, quinolinyl group, quinazoline group, quinoxalinyl group, phthalazinyl group, pyridopyrimidinyl group, pyridopyrazinyl group, pyrazinopyrazinyl group, isoquinoline group, indole group, carbazole group, benzoxazole group, benzimidazole group, benzothiazole group, benzocarbazole group, benzothiophene group, dibenzothiophene group, benzofuranyl group, phenanthroline group, isoxazolyl group, thiadiazolyl group, phenothiazinyl group, and dibenzofuranyl group.

In the present specification, the term "alkoxy" refers to an alkyl group bonded to oxygen, and oxygen may be bonded to the aforementioned alkyl. Examples of the alkoxy include, but are not limited to, methoxy group, ethoxy group, propoxy group, butoxy group, pentoxy group, and the like.

In the present specification, the term "acyl" refers to the remainder of a carboxyl group (-COOH) of a carboxylic acid after the OH is removed, and the number of carbon atoms is not particularly limited, but may be 1 to 6. Examples of the acyl include, but are not limited to, acetyl group, propionyl group, malonyl group, benzoyl group, and the like.

In the present specification, the term "silyl" may be represented as -SiR₃, and examples of the silyl may be selected from the group consisting of alkylsilyl group, arylsilyl group, alkylarylsilyl group, and heteroarylsilyl group, but are not limited thereto. More specific examples include, but are not limited to, trimethylsilyl group, triethylsilyl group, t-butyldimethylsilyl group, vinyldimethylsilyl group, propyldimethylsilyl group, triphenylsilyl group, diphenylsilyl group, phenylsilyl group, and the like.

In the present specification, the term "substituted or unsubstituted" may mean being substituted with one or more groups selected from the group consisting of alkoxy group, alkynyloxy group, heteroaryl group, alkenyl group, heterocycloalkyl group, carbonyl group, halogen group, hydroxyl group, alkenyloxy group, carboxyl group, carbonate group, alkyl group, alkynyl group, amine group, cycloalkyl group, silyl group, sulfonate group, phosphate group, thiophosphate group, nitro group, cyano group, heteroalkyl group, cycloalkyl group, aryl group, and ether group, or being unsubstituted.

Furthermore, throughout the present specification, the same symbols may have the same meaning, unless otherwise specified.

The present disclosure relates to a compound for an electrolyte solution, a compound for an electrolyte solution additive, an electrolyte solution material, an electrolyte solution additive, an electrolyte solution for a secondary battery, and a secondary battery.

One aspect of the present disclosure provides an electrolyte solution for a secondary battery, including a novel compound, or an isomer thereof.

The compound may be represented by Formula 1.

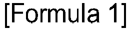

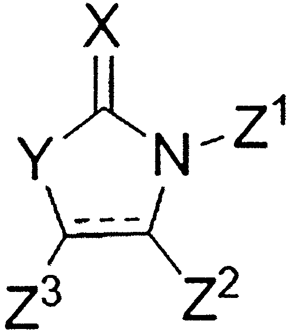

In Formula 1, carbon in the ring is linked by a single bond or a double bond;
X is oxygen or sulfur;
Y is oxygen or sulfur;
Z¹, Z², and Z³ may each independently be selected from the group consisting of hydrogen, substituted or unsubstituted C₁₋₁₀ alkyl, substituted or unsubstituted C₁₋₁₀ alkenyl, substituted or unsubstituted C₁₋₁₀ amine, substituted or unsubstituted C₁₋₁₀ acyl, substituted or unsubstituted C₁₋₁₀ alkynyl, substituted or unsubstituted C₃₋₁₀ cycloalkyl, substituted or unsubstituted silyl, substituted or unsubstituted C₁₋₁₀ alkoxy, substituted or unsubstituted C₁₋₁₂ heteroalkyl, substituted or unsubstituted C₁₋₆ heterocycloalkyl, -SO₂R¹, -P(=G)(OR¹)₂, and - P(=G)(R¹)₂;
Z¹ and Z² may or may not be bonded to each other to form a ring;
G is oxygen or sulfur; and
R¹ may be substituted or unsubstituted C₁₋₆ alkyl, C₂₋₆ alkenyl, C₂₋₆ alkynyl, or C₆₋₂₀ aryl.

In an embodiment of the present disclosure, the compound represented by Formula 1 is a compound derived from a heterocyclic compound and may be added to an electrolyte solution as an additive for a lithium secondary battery electrolyte solution. The additive of the present disclosure may form a stable solid electrolyte interphase (SEI) film on the anode surface, while simultaneously minimizing the resistance increase of the lithium secondary battery. Therefore, degradation of the anode is prevented by suppressing the degradation of the passivation capability of the SEI at high temperatures, and a film that facilitates lithium movement is formed, thereby improving room-temperature cycle life.

Specifically, in the compound represented by Formula 1 of the present disclosure, Z¹ may be each independently selected from the group consisting of hydrogen, substituted or unsubstituted C₁₋₁₀ alkyl, substituted or unsubstituted C₁₋₁₀ alkenyl, substituted or unsubstituted C₁₋₁₀ amine, substituted or unsubstituted C₁₋₁₀ acyl, substituted or unsubstituted C₁₋₁₀ alkynyl, substituted or unsubstituted C₃₋₁₀ cycloalkyl, substituted or unsubstituted silyl, - SO₂R¹, and - P(=G)(OR¹)₂; and Z² and Z³ may be each independently selected from the group consisting of hydrogen, substituted or unsubstituted C₁₋₁₀ alkyl, substituted or unsubstituted C₁₋₁₀ alkenyl, substituted or unsubstituted C₁₋₁₀ alkoxy, and substituted or unsubstituted C₁₋₁₂ heteroalkyl.

More specifically, in the compound represented by Formula 1 of the present disclosure, Z¹ may be each independently selected from the group consisting of hydrogen, substituted or unsubstituted C₁₋₁₀ alkenyl, substituted or unsubstituted C₁₋₁₀ acyl, substituted or unsubstituted C₁₋₁₀ alkynyl, and - SO₂R¹; and Z² and Z³ may be each independently selected from the group consisting of hydrogen and substituted or unsubstituted C₁₋₁₀ alkyl.

The substituted alkyl, alkenyl, amine, acyl, alkynyl, cycloalkyl, silyl, alkoxy, heteroalkyl, and heterocycloalkyl of the present disclosure may each independently be substituted with one or more substituents selected from the group consisting of alkoxy group, alkynyloxy group, heteroaryl group, alkenyl group, heterocycloalkyl group, carbonyl group, halogen group, hydroxyl group, alkenyloxy group, carboxyl group, carbonate group, alkyl group, alkynyl group, amine group, cycloalkyl group, silyl group, sulfonate group, phosphate group, thiophosphate group, nitro group, cyano group, heteroalkyl group, cycloalkyl group, aryl group, and ether group. For example, the substituted alkoxy group may be substituted with an alkenyl group, alkynyl group, amine group, cycloalkyl group, carbonyl group, or silyl group; the substituted heterocycloalkyl group may be substituted with a carbonyl group; the substituted carboxyl group may be substituted with a heteroaryl group, alkenyl group, heterocycloalkyl group, a heterocycloalkyl group substituted with a carbonyl group, or halogen group; and the substituted carbonate group may be substituted with an alkyl group or alkynyl group. Furthermore, the substituted sulfonate group may be substituted with an alkyl group, alkenyl group, or halogen-substituted alkyl group, and the substituted sulfonate group and thiophosphate group may each independently be substituted with an alkyl group.

The electrolyte solution for a secondary battery of the present disclosure includes the compound represented by Formula 1 as an additive, and may further include additional additives. For example, the electrolyte solution may further include one or more additives selected from the group consisting of LiPO₂F₂, unsaturated cyclic carbonate, cyclic sultone, cyclic sulfate lactone, nitrile compound, and mixtures thereof, but is not limited thereto.

In the present disclosure, the unsaturated cyclic carbonate is a cyclic carbonate having a carbon-carbon unsaturated bond, for example, a carbonate having a carbon-carbon unsaturated bond such as a carbon-carbon double bond or a carbon-carbon triple bond, and is not particularly limited, and any unsaturated cyclic carbonate may be used.

As the additional additive of the present disclosure, the unsaturated cyclic carbonate may be, for example, one or more selected from the group consisting of vinylene carbonate, phenyl carbonate, vinyl carbonate, and allyl carbonate. As the vinylene carbonates, one or more selected from the group consisting of vinylene carbonate, methyl vinylene carbonate, 4,5-dimethyl vinylene carbonate, phenyl vinylene carbonate, 4,5-diphenyl vinylene carbonate, vinyl vinylene carbonate, 4,5-vinyl vinylene carbonate, allyl vinylene carbonate, and 4,5-diallyl vinylene carbonate may be added.

A cyclic sultone may be added as an additional additive of the present disclosure. In an embodiment, 1,3-propanesultone, 1-fluoro-1,3-propanesultone, 2-fluoro-1,3-propanesultone, 3-fluoro-1,3-propanesultone, 1,4-butanesultone, methylene methanedisulfonate, and ethylene methanedisulfonate are preferable from the viewpoint of improving storage characteristics, and one or more selected from the group consisting of 1,3-propanesultone, 1-fluoro-1,3-propanesultone, 2-fluoro-1,3-propanesultone, and 3-fluoro-1,3-propanesultone may be added.

As one specific embodiment of the present disclosure, the compound represented by Formula 1 may include at least one compound selected from the group represented by the following formulas, or an isomer thereof:

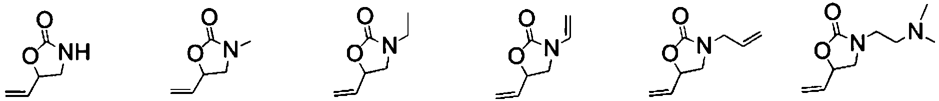

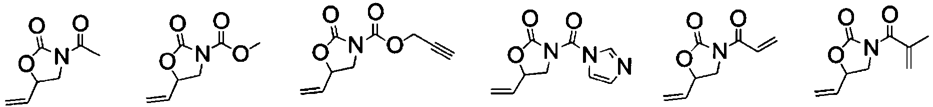

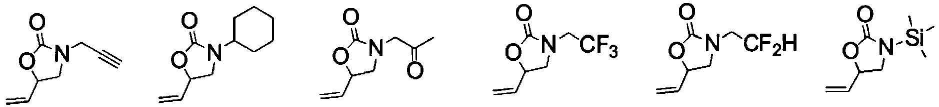

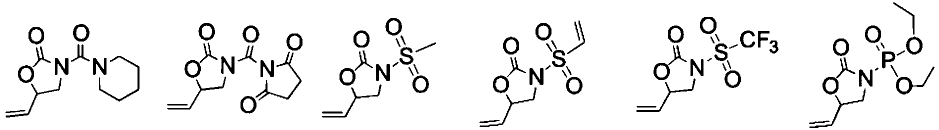

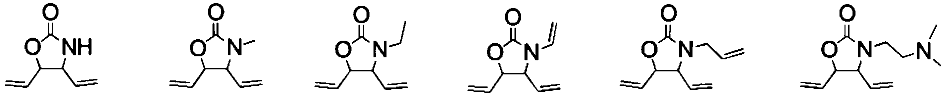

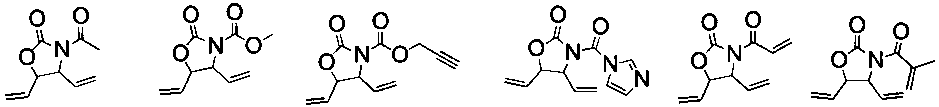

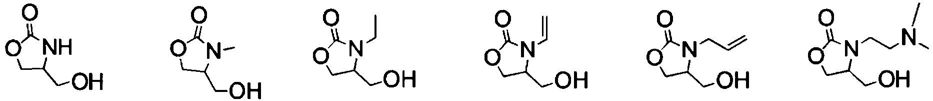

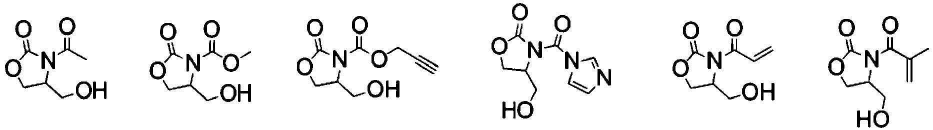

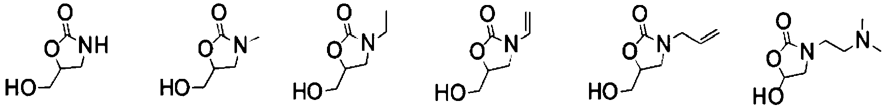

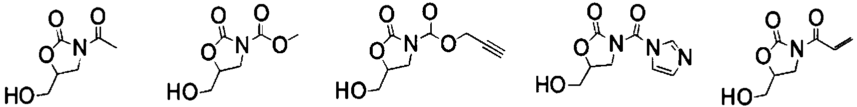

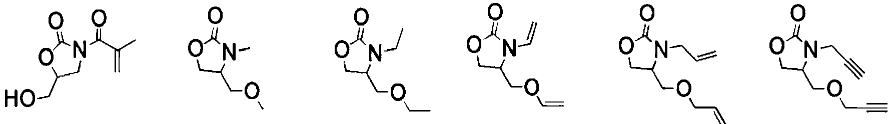

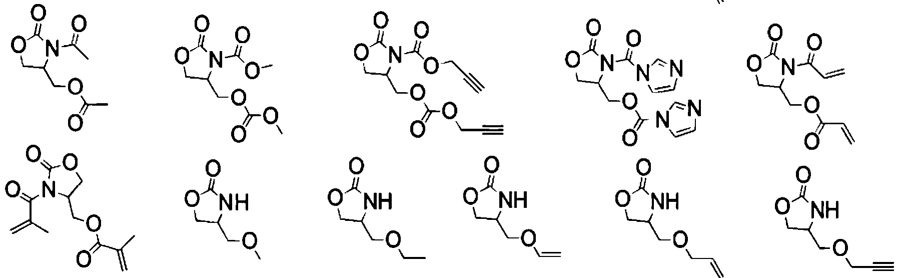

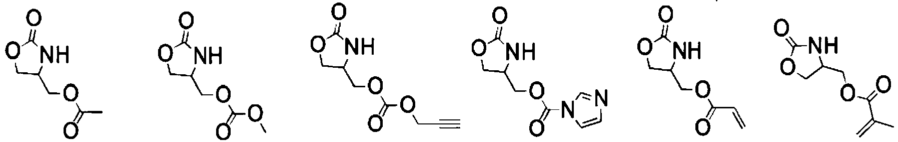

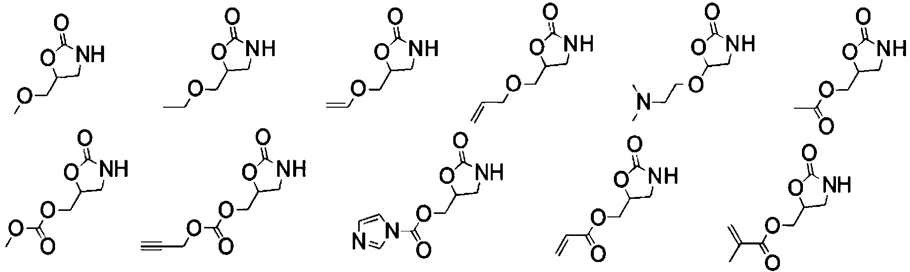

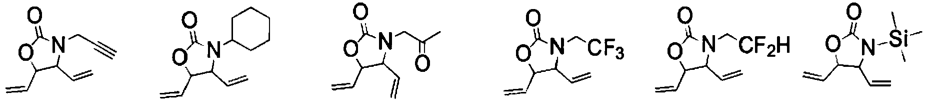

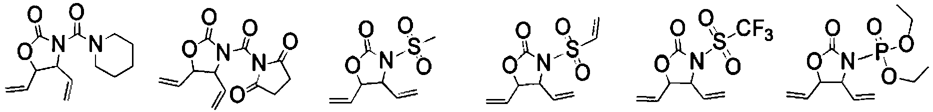

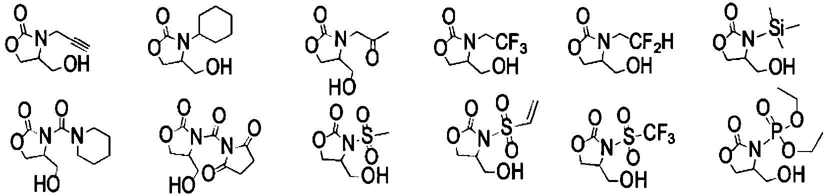

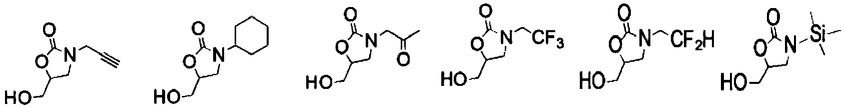

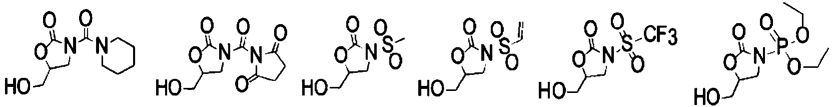

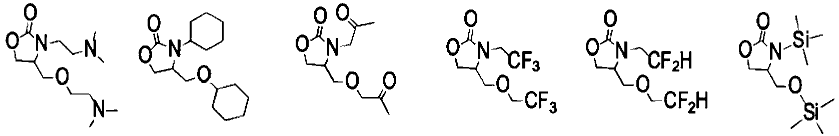

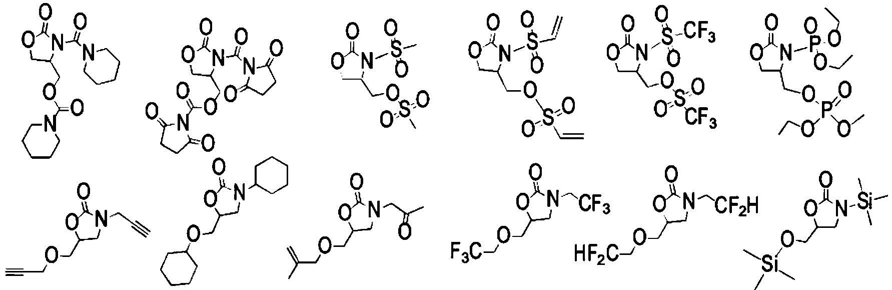

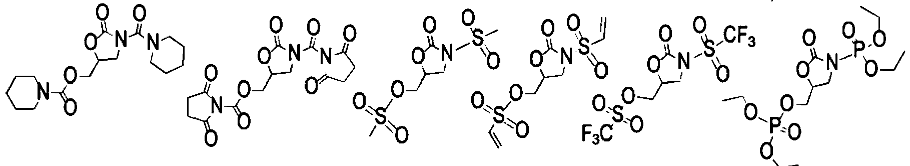

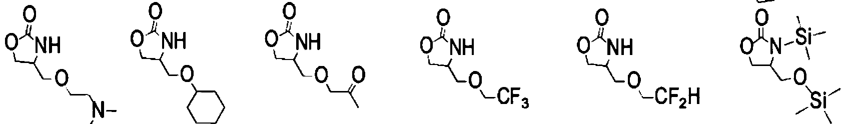

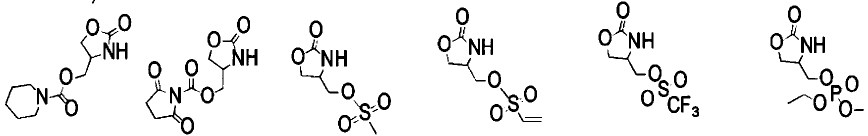

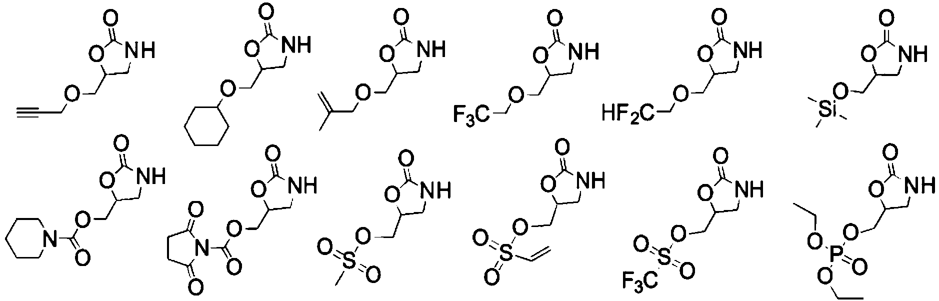

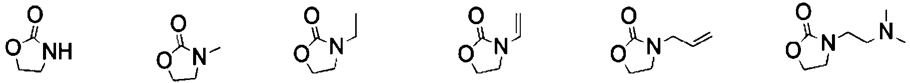

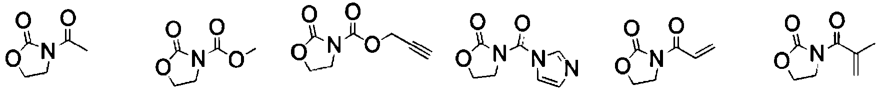

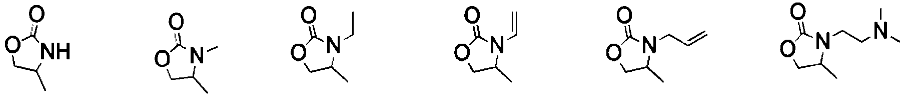

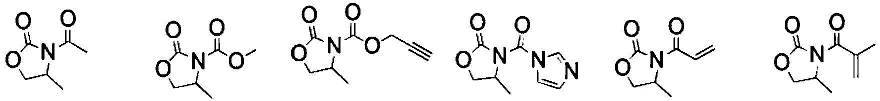

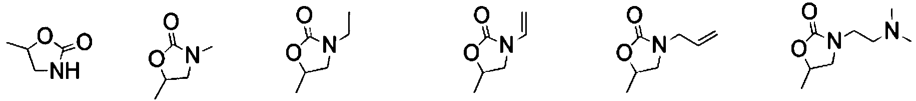

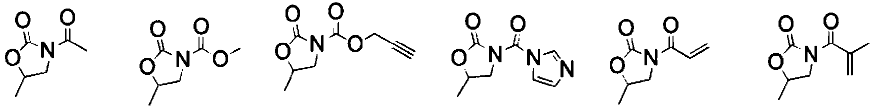

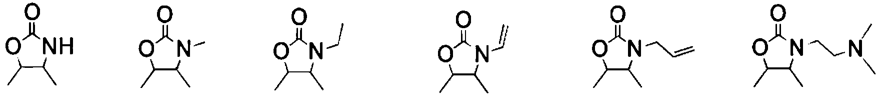

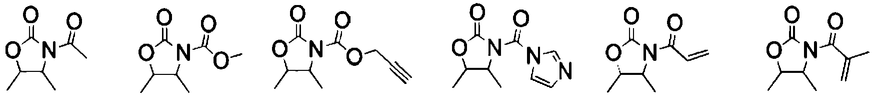

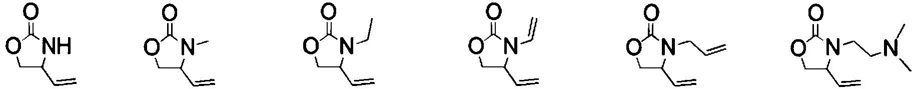

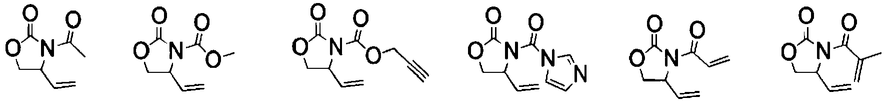

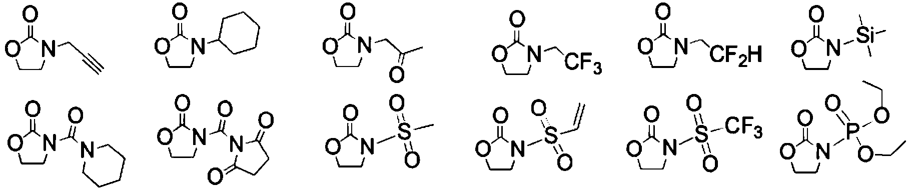

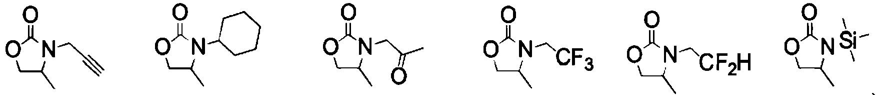

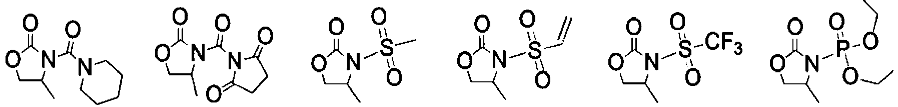

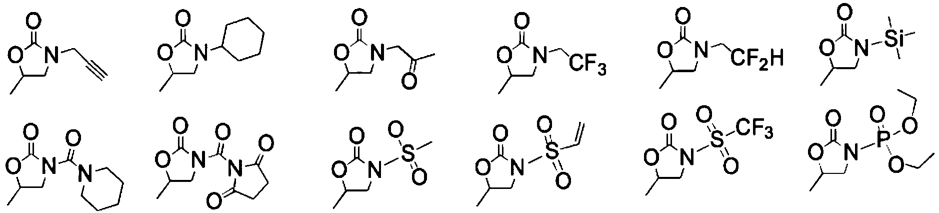

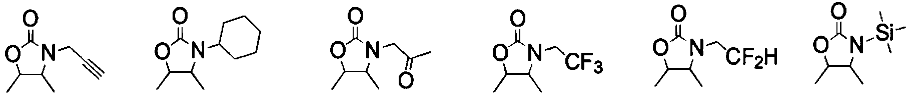

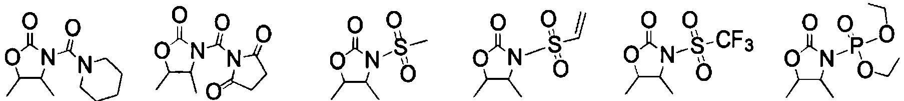

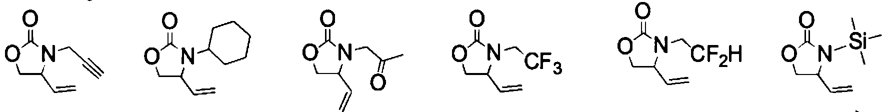

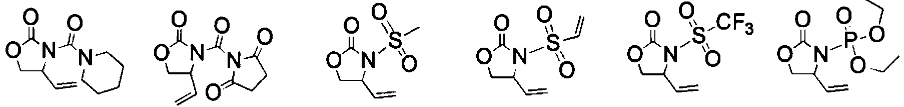

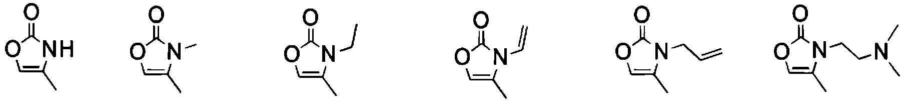

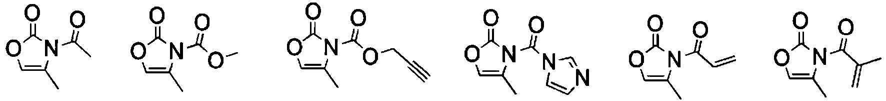

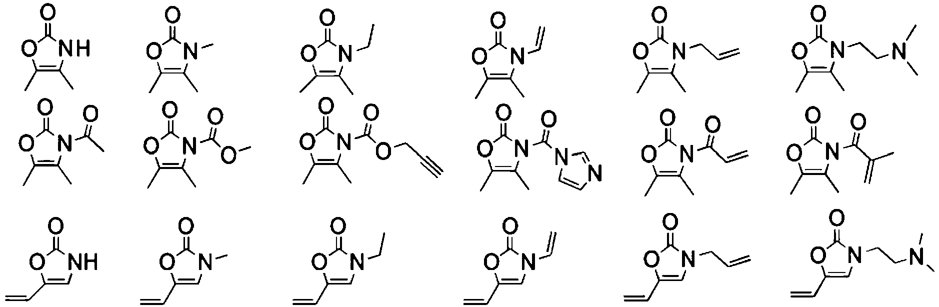

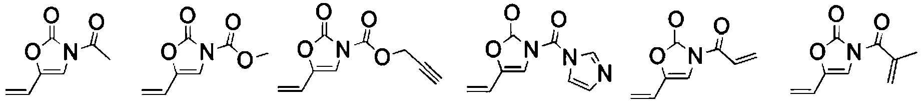

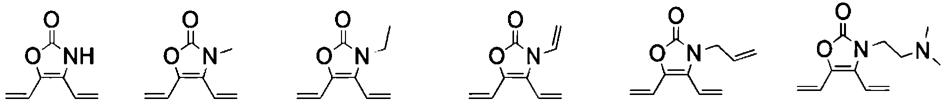

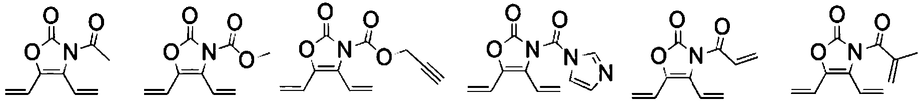

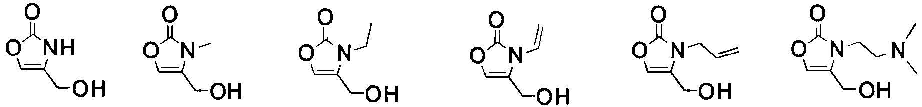

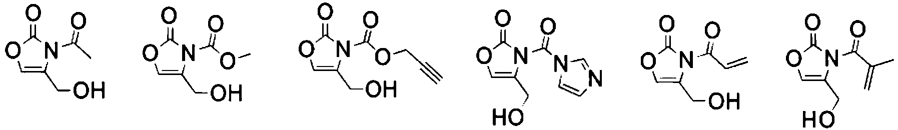

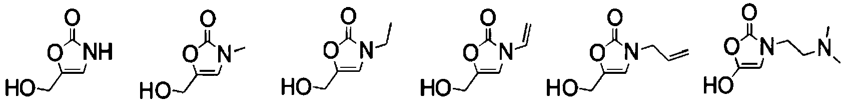

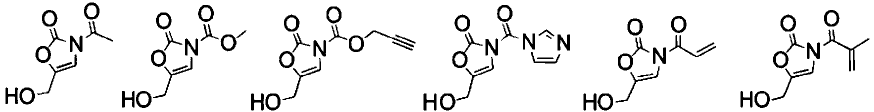

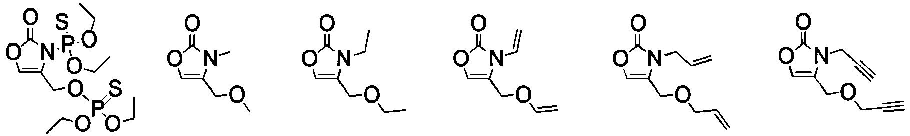

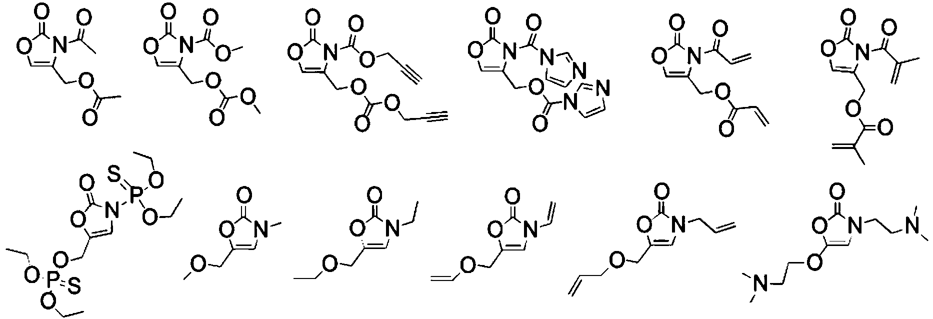

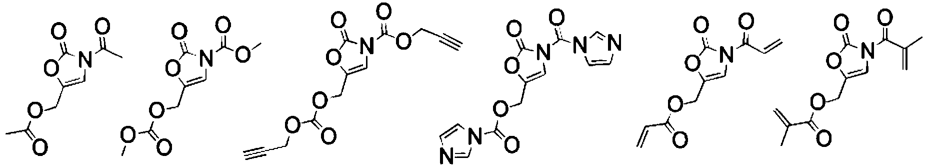

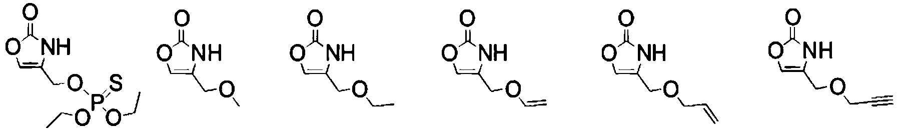

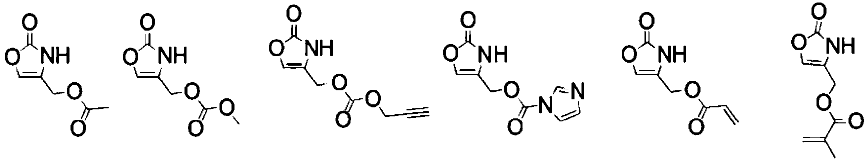

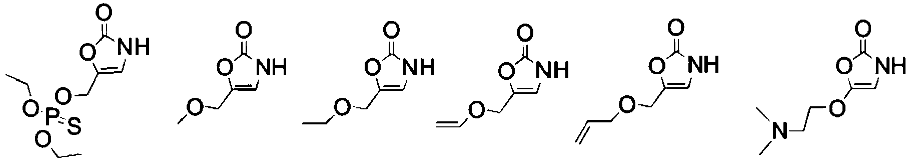

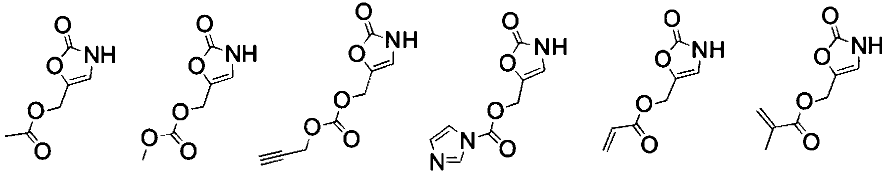

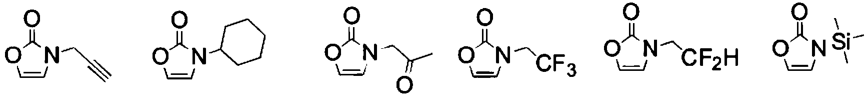

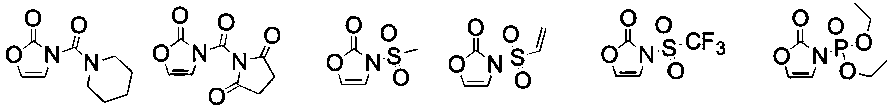

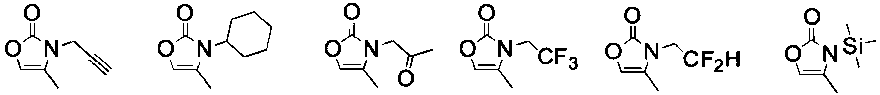

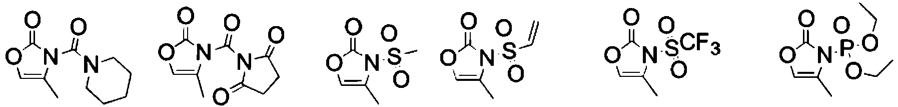

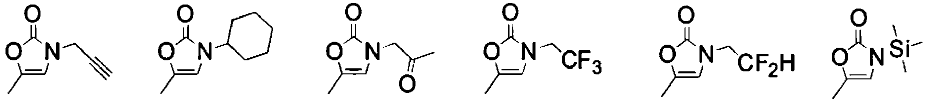

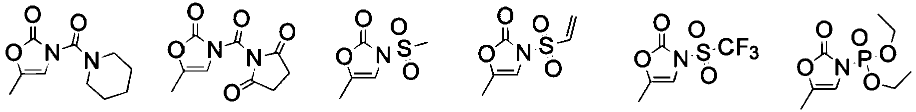

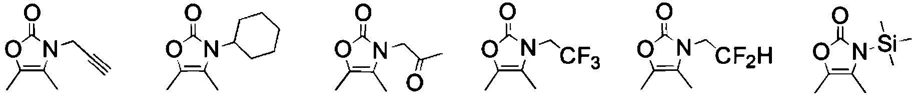

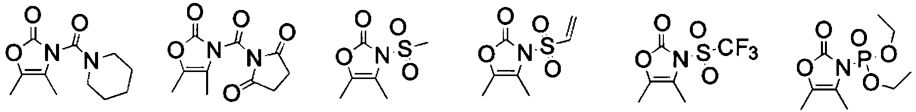

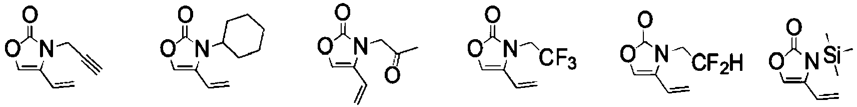

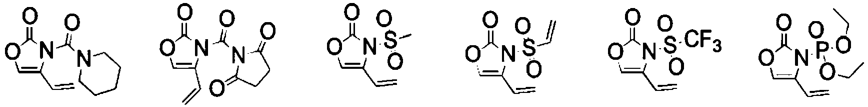

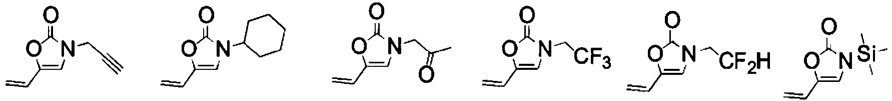

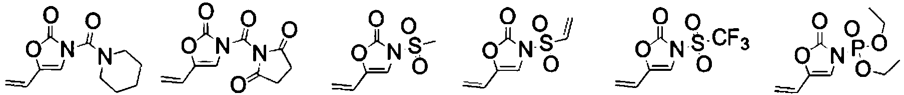

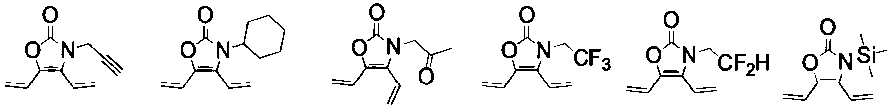

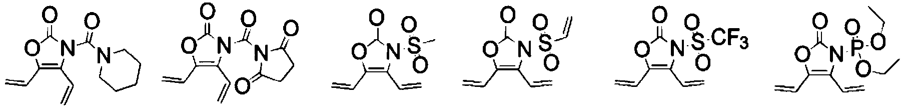

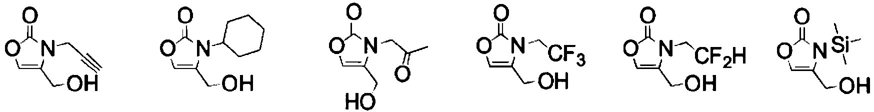

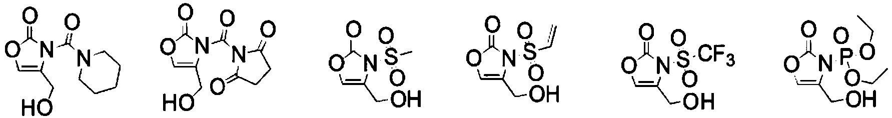

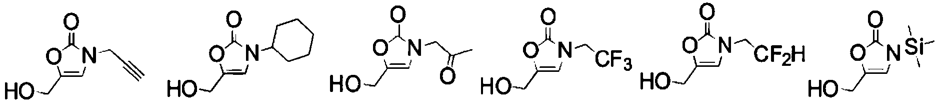

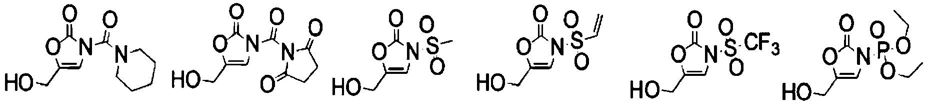

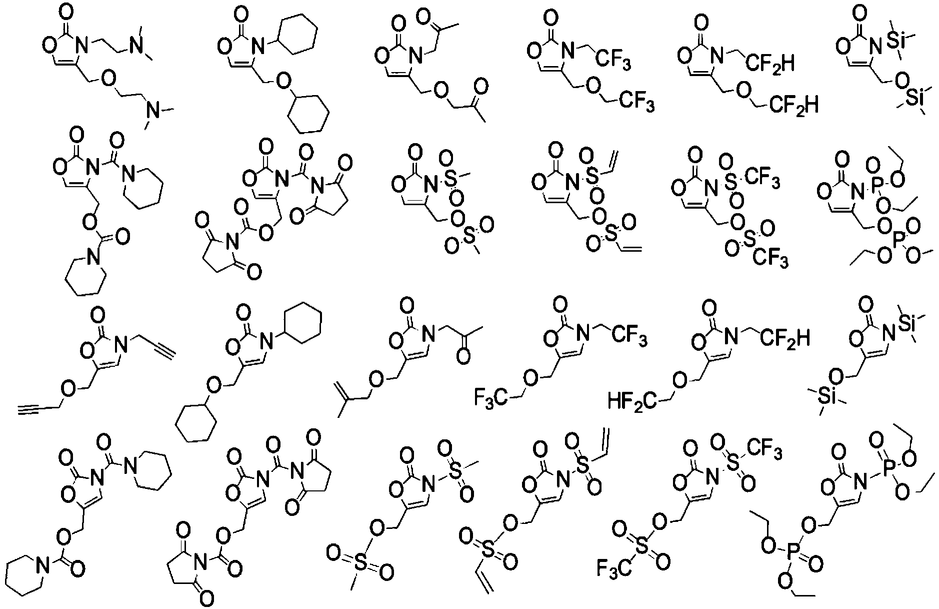

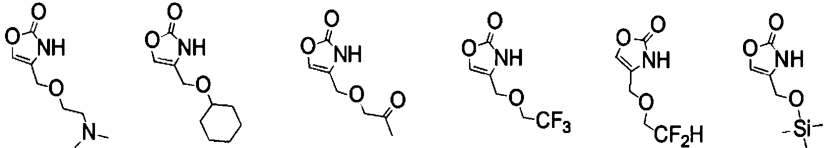

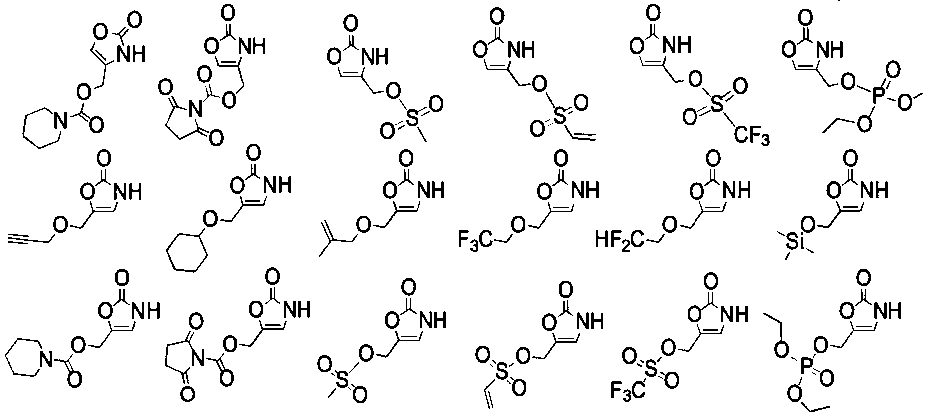

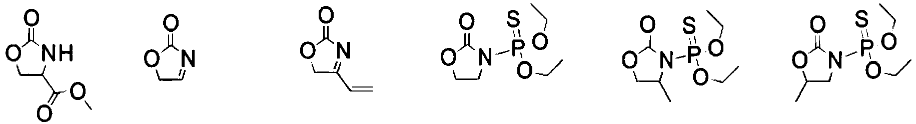

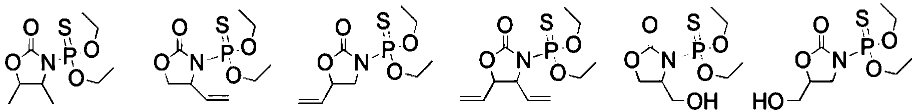

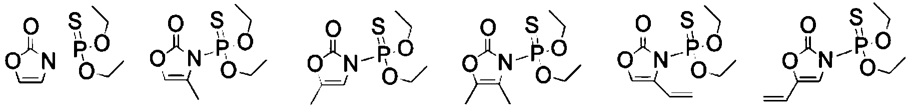

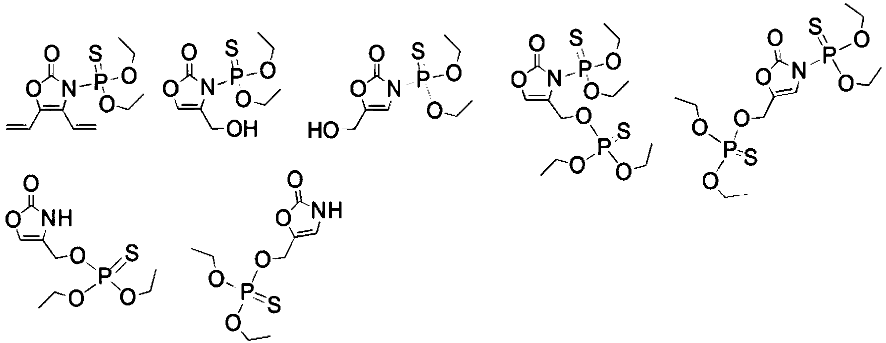

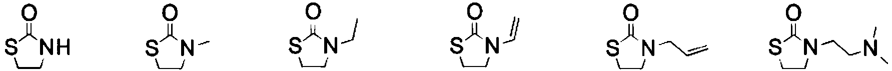

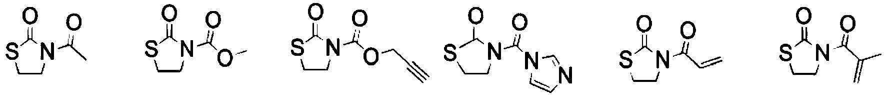

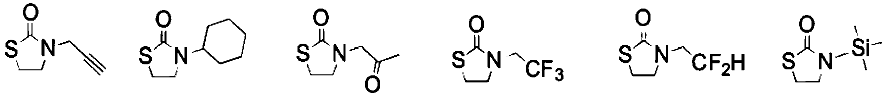

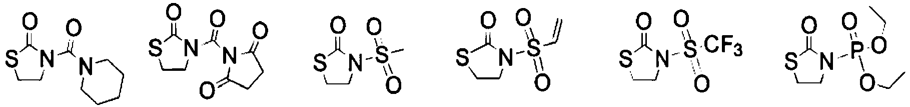

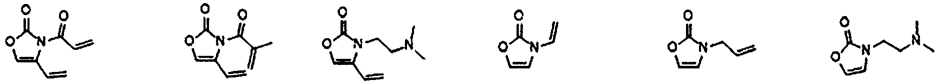

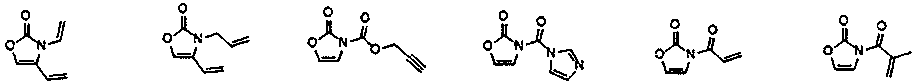

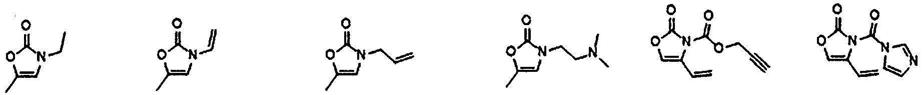

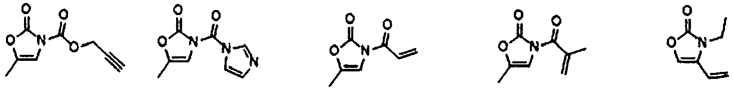

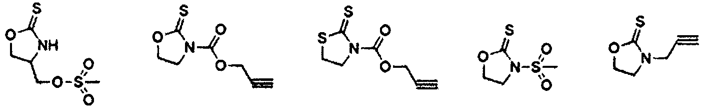

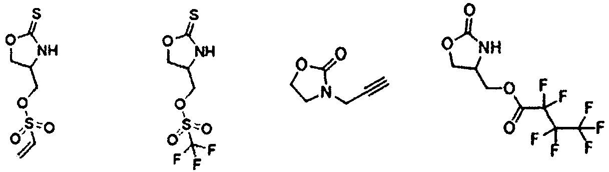

Furthermore, the compound of the present disclosure may have a chiral carbon center, and thus may exist in the form of R or S isomers, racemic compounds, individual enantiomers or mixtures thereof, or individual diastereomers or mixtures thereof, and all such stereoisomers and mixtures thereof may fall within the scope of the present disclosure.

The compound of the present disclosure may be included in an amount of about 0.1 wt% or more based on the total weight of the electrolyte solution, but is not limited thereto, and an appropriate amount within this content range may be used as needed.

If the content of the compound in the total electrolyte solution is excessively high, swelling of the battery may occur due to excess gas, and the life characteristics may be degraded thereby.

From this viewpoint, the content of the compound, based on the total weight of the electrolyte solution, may be 0.01 to 10 wt%; 0.01 to 9 wt%; 0.01 to 8 wt%; 0.01 to 7 wt%; 0.01 to 6 wt%; 0.01 to 5 wt%; 0.01 to 4 wt%; 0.01 to 3 wt%; 0.01 to 2 wt%; 0.01 to 1 wt%; 0.1 to 10 wt%; 0.1 to 9 wt%; 0.1 to 8 wt%; 0.1 to 7 wt%; 0.1 to 6 wt%; 0.1 to 5 wt%; 0.1 to 4 wt%; 0.1 to 3 wt%; 0.1 to 2 wt%; 0.1 to 1 wt%; 1 to 10 wt%; 1 to 9 wt%; 1 to 8 wt%; 1 to 7 wt%; 1 to 6 wt%; 1 to 5 wt%; 1 to 4 wt%; 1 to 3 wt%; 1 to 2 wt%; 5 to 10 wt%; 5 to 9 wt%; 5 to 8 wt%; 5 to 7 wt%; or 5 to 6 wt%, but any range is usable as long as it functions as an overcharge protection agent and does not degrade life characteristics.

Meanwhile, in an embodiment, the electrolyte solution for a secondary battery may further include a lithium salt and an organic solvent.

The concentration of the lithium salt in the electrolyte solution may be about 0.01 to 2.0 M, but is not necessarily limited thereto, and an appropriate concentration may be used as needed. Within this concentration range, further improved battery characteristics may be obtained.

The lithium salt used in the electrolyte solution is not particularly limited, and any salt available as a lithium salt in the art may be used. For example, one or more selected from the group consisting of LiPF₆, LiBF₄, LiSbF₆, LiAsF₆, LiClO₄, LiCF₃SO₃, Li(CF₃SO₂)₂N, LiC₄F₉SO₃, LiAlO₂, LiAICl₄, LiC₂F₆NO₄S₂, LiB(C₂O₄)₂, LiN(CₓF₂ₓ+₁SO₂)(C_{y}F_{2y}+₁SO₂) (wherein x and y are independently integers of 1 or more), LiCl, and Lil may be used.

The organic solvent may include one or more selected from the group consisting of dialkyl carbonates, cyclic carbonates, linear or cyclic esters, linear or cyclic amides, aliphatic nitriles, linear or cyclic ethers, and derivatives thereof.

Specifically, the organic solvent may include one or more selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), fluoroethylene carbonate (FEC), butylene carbonate, ethyl propionate (EP), ethyl butyrate, acetonitrile (AN), succinonitrile (SN), dimethyl sulfoxide, dimethylformamide, dimethylacetamide, gamma-valerolactone, gammabutyrolactone, and tetrahydrofuran, but is not necessarily limited thereto, and any organic solvent available for use in organic electrolytes in the art may be used.

Another aspect of the present disclosure provides a secondary battery including the electrolyte solution for a secondary battery.

The secondary battery may include: an electrode assembly including a cathode, an anode, and a separator separating the cathode and the anode;
a case housing the electrode assembly; and
the electrolyte solution for a secondary battery, which is housed in the case and immerses the electrode assembly.

The form of the secondary battery is not particularly limited, and includes, but is not limited to, a lithium-ion battery, a lithium-ion polymer battery, a lithiumsulfur battery, a lithium-air battery, and the like.

For example, if the secondary battery is a lithium-ion battery, the following manufacturing method may be used.

First, a cathode is prepared.

For example, a cathode active material composition may be prepared by mixing a cathode active material, a conductive agent, a binder, and a solvent. A cathode plate is manufactured by directly coating the cathode active material composition onto a metal current collector. Alternatively, a cathode plate may be manufactured by casting the cathode active material composition onto a separate support, and then laminating a film, which is peeled from the support, onto a metal current collector. The cathode is not limited to the forms listed above and may be in other forms.

The cathode active material is a lithium-containing metal oxide and may be any material commonly used in the art without limitation. For example, one or more lithium composite oxides containing cobalt, manganese, nickel, or a combination thereof may be used. Specific examples include compounds represented by the following formulas: LiₐA_{1-b}B_{b}D₂ (in the formula, 0.90≤a≤1.8 and 0≤b≤0.5); LiₐE_{1-b}B_{b}O_{2-c}Dₑ (in the formula, 0.90≤a≤1.8, 0≤b≤0.5, and 0≤c≤0.05); LiE_{2-b}B_{b}O_{4-c}D_{c} (in the formula, 0≤b≤0.5 and 0≤c≤0.05); LiₐNi_{1-b}-_{c}Co_{b}B_{c}D_{α} (in the formula, 0.90≤a≤1.8, 0≤b≤0.5, 0≤c≤0.05, and 0<α≤2); LiₐNi_{1-b}-_{c}Co_{b}B_{c}O_{2-α}Fₐ (in the formula, 0.90≤a≤1.8, 0≤b≤0.5, 0≤c≤0.05, and 0<α<2); LiₐNi_{1-b-c}Co_{b}B_{c}O_{2-α}F₂ (in the formula, 0.90≤a≤1.8, 0≤b≤0.5, 0≤c≤0.05, and 0<α<2); LiₐNi_{1-b-c}Mn_{b}B_{c}D_{α} (in the formula, 0.90≤a≤1.8, 0≤b≤0.5, 0≤c≤0.05, and 0<α≤2); LiₐNi_{1-b-c}Mn_{b}B_{c}O_{2-α}F_{α} (in the formula, 0.90≤a≤1.8, 0≤b≤0.5, 0≤c≤0.05, and 0<α<2); LiₐNi_{1-b-c}Mn_{b}B_{c}O_{2-α}F₂ (in the formula, 0.90≤a≤1.8, 0≤b≤0.5, 0≤c≤0.05, and 0<α<2); LiₐNi_{b}E_{c}G_{d}O₂ (in the formula, 0.90≤a≤1.8, 0≤b≤0.9, 0≤c≤0.5, and 0.001≤d≤0.1);LiₐNi_{b}Co_{c}Mn_{d}GeO₂ (in the formula, 0.90≤a≤1.8, 0≤b≤0.9, 0≤c≤0.5, 0≤d ≤0.5, and 0.001≤e≤0.1); LiₐNiG_{b}O₂ (in the formula, 0.90≤a≤1.8 and 0.001≤b≤0.1); LiₐCoG_{b}O₂ (in the formula, 0.90≤a≤1.8 and 0.001≤b≤0.1); LiₐMnG_{b}O₂ (in the formula, 0.90≤a≤1.8 and 0.001≤b≤0.1); LiₐMn₂G_{b}O₄ (in the formula, 0.90≤a≤1.8 and 0.001≤b≤0.1);QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulas above, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

For example, examples include LiCoO₂, LiMnₓO₂ₓ (x=1, 2), LiNi₁₋ₓMnₓO₂ₓ (0<x<1), LiNi_{1x-y}CoₓMn_{y}O₂ (0≤x≤0.5 and 0≤y≤0.5), LiFePO₄, and the like.

A compound having a coating layer on the surface thereof may be used, or the compound may be used in a mixture with a compound having a coating layer. This coating layer may include a coating element compound selected from an oxide of the coating element, a hydroxide of the coating element, an oxyhydroxide of the coating element, an oxycarbonate of the coating element, or a hydroxycarbonate of the coating element. The compounds forming these coating layers may be amorphous or crystalline. As the coating element included in the coating layer, Mg, Al, Co, K, Na, Ca, Si, Ti, V, Sn, Ge, Ga, B, As, Zr, or a mixture thereof may be used. As for the coating layer formation process, any coating method may be used without limitation (e.g., spray coating, dipping method, etc.) as long as the coating can be applied to the compound using these elements by a method that does not adversely affect the physical properties of the cathode active material. Since this is well understood by those skilled in the art, a detailed description thereof will be omitted.

As the conductive agent, carbon black, graphite particulates, and the like may be used, but the conductive agent is not limited thereto, and any agent available as a conductive agent in the art may be used.

As the binder, a vinylidene fluoride/hexafluoropropylene copolymer, polyvinylidene fluoride (PVDF), polyacrylonitrile, polymethyl methacrylate, polytetrafluoroethylene, and mixtures thereof, or a styrene-butadiene rubberbased polymer, and the like may be used, but the binder is not limited thereto, and any binder available as a binder in the art may be used.

As the solvent, N-methylpyrrolidone, acetone, or water, and the like may be used, but the solvent is not limited thereto, and any solvent available in the art may be used.

The contents of the cathode active material, the conductive agent, the binder, and the solvent are at levels conventionally used in lithium-ion batteries. Depending on the use and configuration of the lithium-ion battery, one or more of the conductive agent, the binder, and the solvent may be omitted.

Next, an anode is prepared.

For example, an anode active material composition is prepared by mixing an anode active material, a conductive agent, a binder, and a solvent. An anode plate is manufactured by directly coating and drying the anode active material composition onto a metal current collector. Alternatively, an anode plate may be manufactured by casting the anode active material composition onto a separate support, and then laminating a film, which is peeled from the support, onto a metal current collector.

As the anode active material, any material available as an anode active material for lithium-ion batteries in the art is possible. For example, the anode active material may include one or more selected from the group consisting of lithium metal, a metal alloyable with lithium, a transition metal oxide, a non-transition metal oxide, and a carbon-based material.

For example, the metal alloyable with lithium may include Si, Sn, Al, Ge, Pb, Bi, Sb, an Si-Y alloy (Y is an alkali metal, an alkaline earth metal, a Group 13 element, a Group 14 element, a transition metal, a rare-earth element, or a combination thereof, but is not Si), an Sn-Y alloy (Y is an alkali metal, an alkaline earth metal, a Group 13 element, a Group 14 element, a transition metal, a rare-earth element, or a combination thereof, but is not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may be lithium titanium oxide, vanadium oxide, lithium vanadium oxide, or the like.

For example, the non-transition metal oxide may be SnO₂, SiOₓ (0<x<3), or the like.

The carbon-based material may be crystalline carbon, amorphous carbon, or a mixture thereof. The crystalline carbon may be graphite, such as formless, planar, flake, spherical, or fibrous natural graphite or artificial graphite, and the amorphous carbon may be soft carbon (low-temperature calcined carbon) or hard carbon, a mesophase pitch carbide, calcined coke, or the like.

In the anode active material composition, the conductive agent and the binder may be the same as those used in the case of the cathode active material composition.

The contents of the anode active material, the conductive agent, the binder, and the solvent are at levels conventionally used in lithium-ion batteries. Depending on the use and configuration of the lithium-ion battery, one or more of the conductive agent, the binder, and the solvent may be omitted.

Next, a separator separating the cathode and the anode is prepared.

For the separator, any material conventionally used in lithium-ion batteries may be used. A material that exhibits low resistance to the transport of electrolyte ions and has an excellent capability to retain the electrolyte solution may be used. For example, the separator may be selected from glass fiber, polyester, Teflon, polyethylene, polypropylene, polytetrafluoroethylene (PTFE), or a combination thereof, and may be in the form of a nonwoven or woven fabric. For example, in lithium-ion batteries, windable separators such as polyethylene or polypropylene may be used, while in lithium-ion polymer batteries, separators with excellent organic electrolyte absorption capability may be used. For example, the separator may be prepared as follows.

A separator composition is prepared by mixing a polymer resin, a filler, and a solvent. The separator composition may be directly coated and dried on the surface of the electrode to form the separator. Alternatively, the separator composition may be cast and dried on a support, and the resulting separator film peeled from the support may be laminated onto the surface of the electrode to form the separator.

The polymer resin used in the preparation of the separator is not particularly limited, and any material available as a binder in electrode plates may be employed. For example, a vinylidene fluoride/hexafluoropropylene copolymer, polyvinylidene fluoride (PVDF), polyacrylonitrile, polymethyl methacrylate, or a mixture thereof may be used.

Next, the above-described electrolyte solution for a secondary battery is prepared.

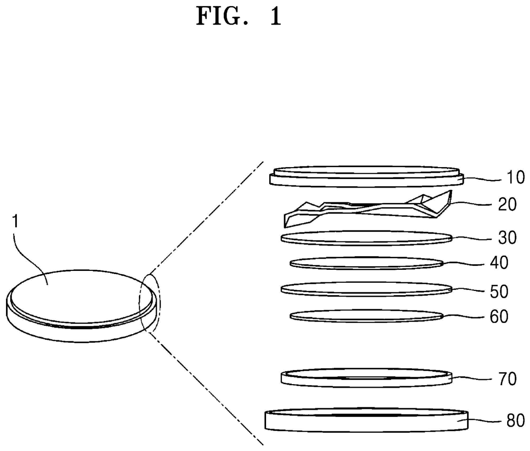

As shown in FIG. 1, a secondary battery 1 includes a cathode 40, an anode 60, and a separator 50. The aforementioned cathode 40, anode 60, and separator 50 are wound or folded and housed in a case 10, 80. Subsequently, an electrolyte solution is injected into the case 10, 80 to complete the secondary battery 1.

The case may be formed to have various sizes and shapes, such as a prismatic type, a thin-film type, a coin type, etc., according to the use and design specifications of the secondary battery.

As one example, the secondary battery may be a coin-type cell. As a specific example, the secondary battery may be a lithium-ion battery.

An electrode assembly may be formed by arranging a separator between the cathode and the anode. The electrode assembly is stacked in a bi-cell structure, impregnated with an electrolyte solution, and the resulting product is housed and sealed in a pouch to complete a lithium-ion polymer battery.

Furthermore, a plurality of the electrode assemblies may be stacked to form a battery pack, and this battery pack may be used in all devices requiring high capacity and high output. For example, the battery pack may be used in laptops, smartphones, electric vehicles, and the like.

### Mode for the Invention

Hereinafter, the present disclosure will be described in detail through Preparation Examples, Examples, and Experimental Examples.

However, the Preparation Examples, Examples, and Experimental Examples described below are only for specifically illustrating one aspect of the present disclosure, and the present disclosure is not limited thereto.

### <Preparation Example 1> Preparation of Compound 1

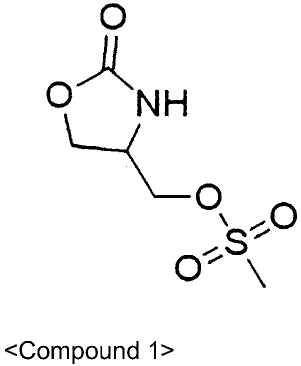

4-hydroxymethyl-2-oxazolidinone (5 g, 0.04 mol) and triethylamine (6.5 g, 0.06 mol) were dissolved in dimethylformamide (20 mL) in a 250 mL 3-neck reactor. Ethyl acetate (80 mL) was then added, and the mixture was cooled to 0 °C. Methanesulfonyl chloride (14.9 g, 0.05 mol) was added dropwise, and the mixture was stirred for 1 hour.

50 mL of ethyl acetate and water (50 mL) were added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. The filtrate was concentrated and purified by column chromatography.

Compound 1 (5.6 g, yield: 70 %) was obtained and confirmed by ¹H-NMR and ¹³C-NMR.

¹H-NMR (400 MHz, DMSO-d₆) d 7.95 (s, 1H), 4.25-4.37 (m, 1H), 4.23-4.15 (m, 2H), 4.14-4.08 (m, 2H), 3.23 (s, 3H), ¹³C-NMR (400 MHz, DMSO-d₆) d 159.1, 71.0, 65.9, 50.9, 37.1

### <Preparation Example 2> Preparation of Compound 2

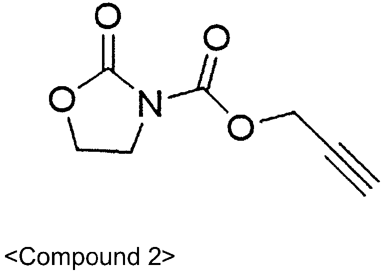

2-oxazolidinone (8 g, 0.09 mol) and triethylamine (18.6 g, 0.18 mol) were dissolved in methylene chloride (80 mL) in a 250 mL 3-neck reactor, and the mixture was cooled to 0 °C. Propargyl chloroformate (12.5 g, 0.1 mol) was added dropwise, and the mixture was stirred for 2 hours.

Water (80 mL) was added to the reactor, and the mixture was stirred vigorously and then allowed to stand. The layers were subsequently separated. The aqueous layer was extracted with methylene chloride (100 mL x 2). Anhydrous magnesium sulfate was added to the organic layer and stirred for 5 minutes. The solid was then filtered off. The filtrate was concentrated and purified by column chromatography.

Compound 2 (13 g, yield: 84 %) was obtained and confirmed by ¹H-NMR and ¹³C-NMR.

¹H-NMR (400 MHz, CDCl₃) d 4.86 (d, 2H,J=0.006Hz), 4.42-4.38 (m, 2H), 4.08-4.04(m, 2H), 2.55-2.54 (m, 1H) , ¹³C-NMR (400 MHz, CDCl₃) d 151.7, 150.3, 76.7, 76.1, 61.8, 54.4, 43.4

### <Preparation Example 3> Preparation of Compound 3

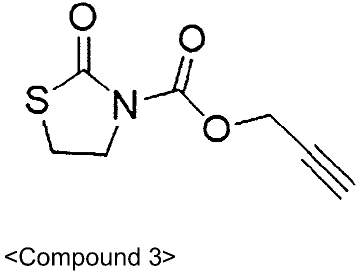

2-thiazolidinone (8 g, 0.08 mol) and triethylamine (15.7 g, 0.16 mol) were dissolved in methylene chloride (80 mL) in a 250 mL 3-neck reactor, and the mixture was cooled to 0 °C. Propargyl chloroformate (10.5 g, 0.09 mol) was added dropwise, and the mixture was stirred for 2 hours.

Water (80 mL) was added to the reactor, and the mixture was stirred vigorously and then allowed to stand. The layers were subsequently separated. The aqueous layer was extracted with methylene chloride (100 mL x 2). Anhydrous magnesium sulfate was added to the organic layer and stirred for 5 minutes. The solid was then filtered off. The filtrate was concentrated and purified by column chromatography.

Compound 3 (12 g, yield: 84 %) was obtained and confirmed by ¹H-NMR and ¹³C-NMR.

¹H-NMR (400 MHz, CDCl₃) d 4.84 (d, 2H,J=0.006Hz), 4.18-4.14 (m, 2H), 3.32-3.28 (m, 2H), 2.54-2.53 (m, 1H) , ¹³C-NMR (400 MHz, CDCl₃) d 170.2, 149.9, 76.8, 76.0, 54.3, 47.6, 25.2

### <Preparation Example 4> Preparation of Compound 4

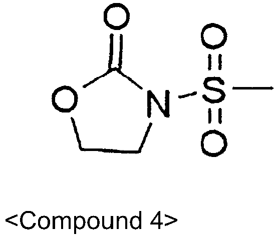

4-hydroxymethyl-2-oxazolidinone (5 g, 0.04 mol) and triethylamine (6.5 g, 0.06 mol) were dissolved in dimethylformamide (20 mL) in a 250 mL 3-neck reactor, and the mixture was cooled to 0 °C. Methanesulfonyl chloride (19.7 g, 0.17 mol) was added dropwise, and the mixture was stirred for 1 hour.

50 mL of ethyl acetate and water (50 mL) were added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. The filtrate was concentrated and purified by column chromatography.

Compound 4 (7.2 g, yield: 75.9 %) was obtained and confirmed by ¹H-NMR.

¹H-NMR (400 MHz, CDCl₃) d 4.517-4.478 (t,1H), 4.122-4.083 (t, 1H), 3.347 (s, 3H)

### <Preparation Example 5> Preparation of Compound 5

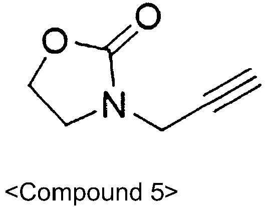

Oxazolidinone (5 g, 0.048 mol) was placed in dimethylformamide (60 mL) in a 100 mL 3-neck reactor and stirred for 10 minutes at room temperature. The mixture was then cooled to 0 °C. 60 % sodium hydride (2.3 g, 0.058 mol) was added portionwise, and the mixture was stirred for 30 minutes. 80 % propargyl bromide (10.1 g, 0.068 mol) was then added dropwise. The mixture was warmed to room temperature and stirred for 1 hour.

Saturated aqueous ammonium chloride solution (40 mL) was added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. Subsequently, the filtrate was concentrated and purified by column chromatography.

Compound 5 (6.8 g, yield: 80 %) was obtained and confirmed by ¹H-NMR and ¹³C-NMR.

¹H-NMR (400 MHz, CDCl₃-d) d 4.38-4.34 (m, 2H), 4.09-4.08 (m, 2H), 3.68-3.64 (m, 2H), 2.31-2.30 (m, 1H), ¹³C-NMR(400 MHz, CDCl₃-d) d 158.0, 76.9, 73.4, 62.1, 43.9, 34.1

### <Preparation Example 6> Preparation of Compound 6

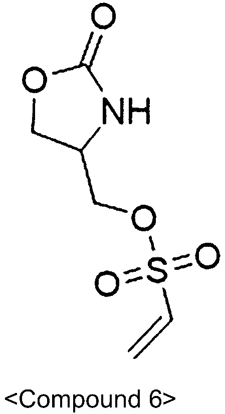

4-hydroxymethyl-2-oxazolidinone (5 g, 0.04 mol) and triethylamine (6.5 g, 0.06 mol) were dissolved in dimethylformamide (20 mL) in a 250 mL 3-neck reactor. Ethyl acetate (80 mL) was then added, and the mixture was cooled to 0 °C. Vinylsulfonyl chloride (6.7 g, 0.05 mol) was added dropwise, and the mixture was stirred for 1 hour.

50 mL of ethyl acetate and water (50 mL) were added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. The filtrate was concentrated and purified by column chromatography.

Compound 6 (6.2 g, yield: 70 %) was obtained and confirmed by ¹H-NMR and ¹³C-NMR.

¹H-NMR (400 MHz, DMSO-d₆) d 7.93 (s, 1H), 7.04-6.97 (m, 1H), 6.37 (dd, 2H, J=4Hz), 4.40-4.13 (m, 1H), 4.13-4.04 (m, 4H), ¹³C-NMR(400 MHz, DMSO-d₆) d 159.0, 132.6, 132.5, 71.5, 65.8, 50.8

### <Preparation Example 7> Preparation of Compound 7

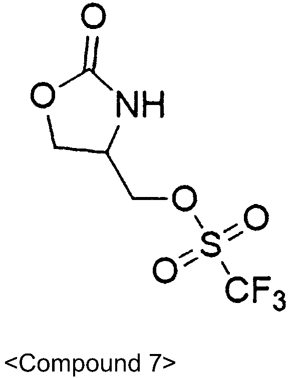

4-hydroxymethyl-2-oxazolidinone (5 g, 0.04 mol) and triethylamine (6.5 g, 0.06 mol) were dissolved in dimethylformamide (20 mL) in a 250 mL 3-neck reactor. Ethyl acetate (80 mL) was then added, and the mixture was cooled to 0 °C. Trifluoromethanesulfonyl chloride (8.6 g, 0.05 mol) was added dropwise, and the mixture was stirred for 1 hour.

50 mL of ethyl acetate and water (50 mL) were added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. The filtrate was concentrated and purified by column chromatography.

Compound 7 (7.9 g, yield: 73 %) was obtained and confirmed by ¹H-NMR, ¹³C-NMR, and ¹⁹F-NMR.

¹H-NMR (400 MHz, DMSO-d₆) d 7.95(s, 1H), 4.43-4.37 (m, 2H), 4.34-4.27 (m, 1H), 4.13-4.07 (m, 2H), ¹³C-NMR(400 MHz, DMSO-d₆) d 159.0, 128.2, 124.8, 121.5, 118.1, 70.7, 65.7, 51.5, ¹⁹F-NMR(400 MHz, DMSO-d₆) d -78.8

### <Preparation Example 8> Preparation of Compound 8

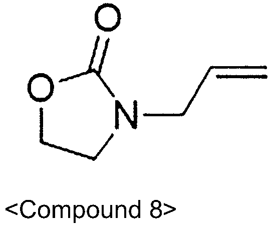

60 % sodium hydride (1.65 g, 0.041 mol) was placed in dimethylformamide (20 mL) in a 100 mL 3-neck reactor and cooled to 0 °C. In a separate flask, a solution of oxazolidinone (3 g, 0.034 mol) dissolved in dimethylformamide (40 mL) was prepared. The oxazolidinone solution was added dropwise to the sodium hydride solution at 0 °C, and the mixture was stirred for 30 minutes. The mixture was cooled again to 0 °C, and allyl bromide (5.53 g, 0.052 mol) was added dropwise. The mixture was then warmed to room temperature and stirred for 1 hour.

Purified water (40 mL) was added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. Subsequently, the filtrate was concentrated and purified by column chromatography.

Compound 8 (3.4 g, yield: 77.6 %) was obtained and confirmed by¹H-NMR and ¹³C-NMR.

¹H-NMR (400 MHz, CDCl₃-d) d 5.81-5.71 (m, 1H),5.26-5.22 (m, 2H), 4.34-4.30 (m, 2H), 3.86-3.85 (m, 2H), 3.53-3.49 (m, 2H), ¹³C-NMR(400 MHz, CDCl₃-d) d 157.9, 131.8, 117.4, 63.3, 44.7, 51.8.

### <Preparation Example 9> Preparation of Compound 9

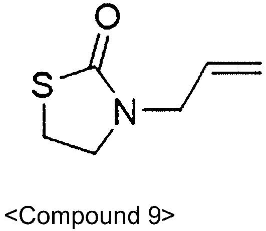

60 % sodium hydride (1.4 g, 0.035 mol) was placed in dimethylformamide (20 mL) in a 100 mL 3-neck reactor and cooled to 0 °C. In a separate flask, a solution of thiazolidinone (3 g, 0.029 mol) dissolved in dimethylformamide (40 mL) was prepared. Once the sodium hydride solution was cooled to 0 °C, the thiazolidinone solution was added dropwise, and the mixture was stirred for 30 minutes. The mixture was cooled again to 0 °C, and allyl bromide (4.67 g, 0.044 mol) was added dropwise. The mixture was then warmed to room temperature and stirred for 1 hour.

Purified water (40 mL) was added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. Subsequently, the filtrate was concentrated and purified by column chromatography.

Compound 9 (3.1 g, yield: 74.4 %) was obtained and confirmed by¹H-NMR and ¹³C-NMR.

¹H-NMR (400 MHz, CDCl₃-d) d 5.79-5.70 (m, 1H),5.24-5.19 (m, 2H), 3.92-3.90 (m, 2H), 3.60-3.57 (m, 2H), 3.28-3.24 (m, 2H), ¹³C-NMR(400 MHz, CDCl₃-d) d 171.4, 117.4, 131.8, 53.0, 43.5, 29.0

### <Preparation Example 10> Preparation of Compound 10

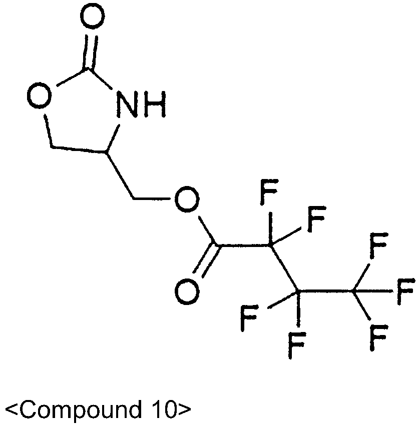

4-hydroxymethyl-2-oxazolidinone (3.5 g, 0.03 mol) and triethylamine (6.7 g, 0.066 mol) were dissolved in dimethylformamide (30 mL) in a 100 mL 3-neck reactor and stirred.

In a 50 mL 3-neck reactor, perfluorobutanoic acid (6.42 g, 0.03 mol) was dissolved in dimethylformamide (2.63 g, 0.036 mol), and then thionyl chloride (3.75 g, 0.032 mol) was added dropwise over 30 minutes. This solution was added dropwise to the 100 mL 3-neck reactor over 10 minutes, and the mixture was stirred for 2 hours.

The reaction mixture was filtered and washed with dichloromethane, and the filtrate was concentrated. The concentrate was dissolved in dichloromethane, and then anhydrous magnesium sulfate was added and stirred for 5 minutes. The solid was filtered off, and the filtrate was concentrated and purified by column chromatography.

Compound 10 (6.5 g, yield: 69 %) was obtained and confirmed by¹H-NMR.

¹H-NMR (400 MHz, CDCl₃) d 6.55 (s, 1H), 4.59-4.54 (m, 1H), 4.52-4.48 (m, 1H), 4.39-4.35 (m, 1H), 4.27-4.21 (m, 2H)

### <Preparation Example 11> Preparation of Compound 11

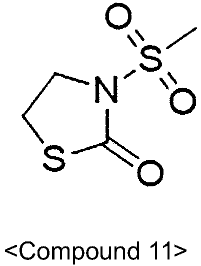

Thiazolidinone (5 g, 0.049 mol) and triethylamine (9.82 g, 0.097 mol) were added to dichloromethane (50 mL) in a 100 mL 3-neck reactor and stirred for 30 minutes at room temperature, and the mixture was cooled to -10 °C. Once the mixture was cooled, methanesulfonyl chloride (7.0 g, 0.058 mol) was added dropwise, and the mixture was stirred for 1 hour.

Water (50 mL) was added to the reactor, and the mixture was stirred vigorously and then allowed to stand. The layers were subsequently separated. The aqueous layer was extracted with dichloromethane (50 mL x 2). Anhydrous magnesium sulfate was added to the organic layer and stirred for 5 minutes. The solid was then filtered off. The filtrate was concentrated and purified by column chromatography.

Compound 11 (6.8 g, yield: 77.3 %) was obtained and confirmed by¹H-NMR and ¹³C-NMR.

¹H-NMR (400 MHz, CDCl₃-d) d 4.18-4.14 (m, 2H), 3.42-3.40 (m, 2H), 3.31 (s, 3H), ¹³C-NMR(400 MHz, CDCl₃-d) d 173.2, 45.6, 36.8, 27.5

### <Preparation Example 12> Preparation of Compound 12

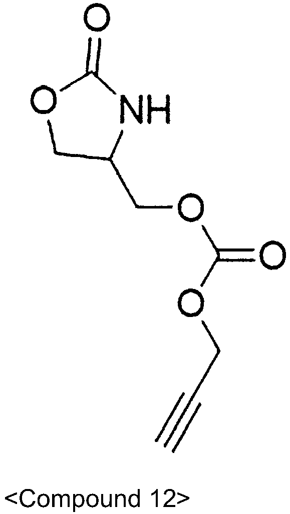

4-hydroxymethyl-2-oxazolidinone (5 g, 0.04 mol) and triethylamine (6.5 g, 0.06 mol) were dissolved in dimethylformamide (20 mL) in a 250 mL 3-neck reactor. Ethyl acetate (80 mL) was then added, and the mixture was cooled to 0 °C. Propargyl chloroformate (6 g, 0.05 mol) was added dropwise, and the mixture was stirred for 1 hour.

50 mL of ethyl acetate and water (50 mL) were added to the reactor, and the mixture was stirred vigorously and then allowed to stand. The layers were subsequently separated. The aqueous layer was extracted with ethyl acetate (50 mL x 2). Anhydrous magnesium sulfate was added to the organic layer and stirred for 5 minutes. The solid was then filtered off. The filtrate was concentrated and purified by column chromatography.

Compound 12 (4.3 g, yield: 75 %) was obtained and confirmed by¹H-NMR and ¹³C-NMR.

¹H-NMR (400 MHz, DMSO-d₆) d 7.89 (s, 1H), 4.79 (s, 2H), 4.40-4.31 (m, 1H), 4.16-4.04 (m, 4H), 3.67 (s, 1H), ¹³C-NMR(400 MHz, DMSO-d₆) d 159.1, 154.3, 78.7, 69.8, 66.14, 55.9, 50.7

### <Preparation Example 13> Preparation of Compound 13

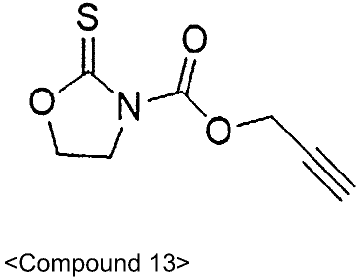

1,3-oxazolidine-2-thione (5 g, 0.05 mol) and triethylamine (9.8 g, 0.1 mol) were dissolved in methylene chloride (50 mL) in a 250 mL 3-neck reactor, and the mixture was cooled to 0 °C. Propargyl chloroformate (6.9 g, 0.06 mol) was added dropwise, and the mixture was stirred for 2 hours.

Water (80 mL) was added to the reactor, and the mixture was stirred vigorously and then allowed to stand. The layers were subsequently separated. The aqueous layer was extracted with methylene chloride (100 mL x 2). Anhydrous magnesium sulfate was added to the organic layer and stirred for 5 minutes. The solid was then filtered off. The filtrate was concentrated and purified by column chromatography.

Compound 13 (7.2 g, yield: 80.2 %) was obtained and confirmed by ESI-MS.
ESI-MS m/z 185.01 [M+H]⁺

### <Preparation Example 14> Preparation of Compound 14

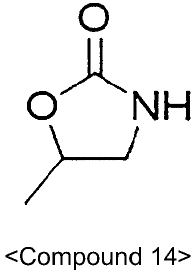

1-amino-2-propanol (6.4 g, 0.09 mol) was dissolved in methylene chloride (70 mL) in a 250 mL 3-neck reactor. Triethylamine (25.9, 0.26 mol) was added, and the mixture was stirred under nitrogen. Triphosgene (12.6 g, 0.04 mol) was added, and the mixture was stirred at room temperature for 20 hours. The reaction was quenched with aqueous ammonium chloride solution (10 mL).

Water (80 mL) was added to the reactor, and the mixture was stirred vigorously and then allowed to stand. The layers were subsequently separated. The aqueous layer was extracted with methylene chloride (100 mL x 2). Anhydrous magnesium sulfate was added to the organic layer and stirred for 5 minutes. The solid was then filtered off. The filtrate was concentrated and purified by column chromatography.

Compound 14 (4 g, yield: 46.4 %) was obtained and confirmed by ESI-MS.
ESI-MS m/z 102 [M+H]⁺

### <Example 1> Preparation of Electrolyte Solution for Secondary Battery

1.0 M LiPF₆ was dissolved in a solvent mixture of ethylene carbonate (EC):ethyl methyl carbonate (EMC):dimethyl carbonate (DMC) in a volume ratio of 20:40:40.

Based on the total weight of the electrolyte solution (100 wt%), additives were added according to Table 1 below to prepare the electrolyte solutions of Examples and Comparative Examples.

**[Table 1]**

| Item | Additive 1 | Concentration (wt%) | Additive 2 | Concentration (wt%) | Number of Charge-Discharge Cycles (1 C) |
|---|---|---|---|---|---|
| Comparative Example 1 | None | | | | 200 |
| Comparative Example 2 | 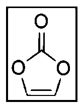 | 1 | | | 200 |
| Comparative Example 3 | 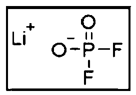 | 1 | | | 200 |
| Comparative Example 4 | 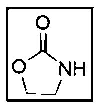 | 0.5 | | | 200 |
| Comparative Example 5 | 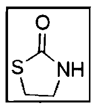 | 0.5 | | | 200 |
| Example 1 | 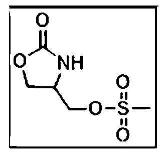 | 1 | | | 200 |
| Example 2 | 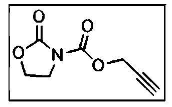 | 1 | | | 200 |
| Example 3 | 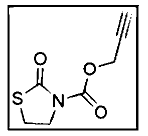 | 1 | | | 200 |
| Example 4 | 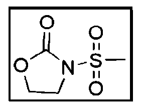 | 0.5 | | | 200 |
| Comparative Example 6 | None | | | | 100 |
| Comparative Example 7 | 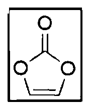 | 1 | | | 100 |
| Example 5 | 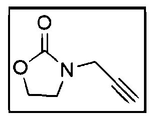 | 0.5 | | | 100 |
| Example 6 | 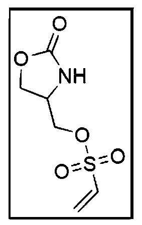 | 0.5 | | | 100 |
| Example 7 | 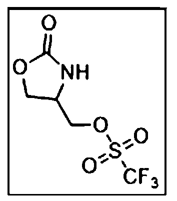 | 0.5 | | | 100 |
| Example 8 | 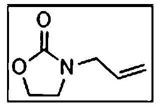 | 0.5 | | | 100 |
| Example 9 | 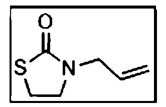 | 0.5 | | | 100 |
| Example 10 | 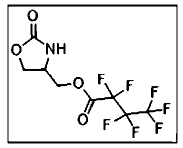 | 0.5 | | | 100 |
| Example 11 | 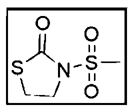 | 0.5 | | | 200 |
| Example 12 | 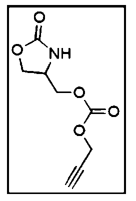 | 0.5 | | | 100 |
| Example 13 | 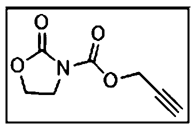 | 0.5 | 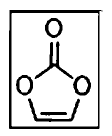 | 1 | 200 |
| Example 14 | 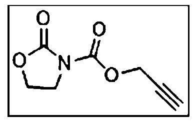 | 1 | 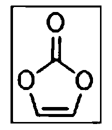 | 1 | 200 |
| Example 15 | 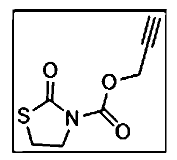 | 0.5 | 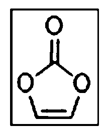 | 1 | 200 |
| Example 16 | 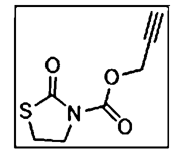 | 1 | 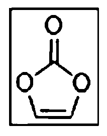 | 1 | 200 |
| Example 17 | 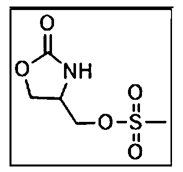 | 1 | 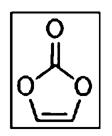 | 1 | 200 |
| Example 18 | 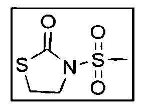 | 1 | 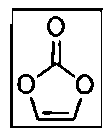 | 1 | 200 |
| Example 19 | 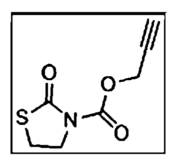 | 1 | 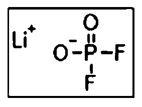 | 1 | 200 |

### <Example 2> Manufacture of Coin Cell

An anode active material slurry was prepared by mixing 96 wt% of artificial graphite (S360-L2-H Tiangin BTR New energy technology Co., Ltd.), 1 wt% of SuperP (TIMCAL), 1.5 wt% of styrene-butadiene rubber (SBR) binder (ZEON), and 1.5 wt% of carboxymethyl cellulose (CMC, Sigma-Aldrich), adding the resulting mixture to distilled water, and stirring for 60 minutes using a mechanical stirrer. The slurry was applied onto a 30 µm-thick copper current collector to a thickness of about 60 µm using a doctor blade, dried for 1 hour in a 100 °C hot-air dryer, dried again for 8 hours under vacuum, and roll-pressed to prepare an anode plate.

A cathode active material slurry was prepared by mixing 96 wt% of LiNi_{0.6}Mn_{0.2}Co_{0.2}O₂, 2 wt% of SuperP (TIMCAL) as a conductive agent, and 2 % of polyvinylidene fluoride (PVdF, Sigma-Aldrich) in an N-methyl-2-pyrrolidone solvent, and stirring for 30 minutes using a mechanical stirrer. The slurry was applied onto a 20 µm-thick aluminum collector to a thickness of 60 µm using a doctor blade, dried for 1 hour in a 100 °C hot-air dryer, dried again for 8 hours under vacuum, and roll-pressed to prepare a cathode plate.

Lithium batteries were manufactured using a 14 µm-thick polypropylene as a separator and the organic electrolyte solutions prepared in Examples 1 to 19 as the electrolyte solution, respectively.

### <Experimental Example 1> Evaluation of Room-temperature Cycle Performance

At 25 °C, the lithium secondary batteries were cycled under constant current/constant voltage (CC/CV) as follows: first, the batteries were charged at a constant current of 1.0 C-rate to 4.2 V, followed by a constant voltage hold at 4.2 V until the current was cut off at 0.05 C-rate; and the batteries were finally discharged at a constant current of 1.0 C-rate to 2.7 V. This charge/discharge process constituted one cycle and was repeated.

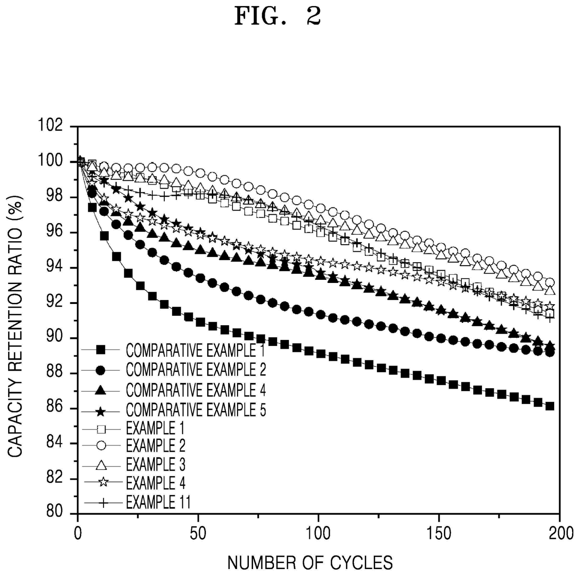

The analysis results are shown in Table 2 and FIGS. 2 to 5.

**[Table 2]**

| Item | Room-temperature Cycle Efficiency (%) | Number of Charge/Discharge Cycles (1 C) |
|---|---|---|
| Comparative Example 1 | 86.2 | 200 |
| Comparative Example 2 | 89.2 | 200 |
| Comparative Example 3 | 75.7 | 200 |
| Comparative Example 4 | 89.5 | 200 |
| Comparative Example 5 | 89.6 | 200 |
| Example 1 | 91.4 | 200 |
| Example 2 | 93.2 | 200 |
| Example 3 | 92.7 | 200 |
| Example 4 | 91.8 | 200 |
| Comparative Example 6 | 89.2 | 100 |
| Comparative Example 7 | 91.4 | 100 |
| Example 5 | 93.2 | 100 |
| Example 6 | 93.0 | 100 |
| Example 7 | 93.6 | 100 |
| Example 8 | 95.1 | 100 |
| Example 9 | 95.1 | 100 |
| Example 10 | 93.4 | 100 |
| Example 11 | 91.1 | 200 |
| Example 12 | 94.2 | 100 |
| Example 13 | 95.4 | 200 |
| Example 14 | 95.0 | 200 |
| Example 15 | 95.0 | 200 |
| Example 16 | 94.3 | 200 |
| Example 17 | 93.5 | 200 |
| Example 18 | 94.9 | 200 |
| Example 19 | 93.1 | 200 |

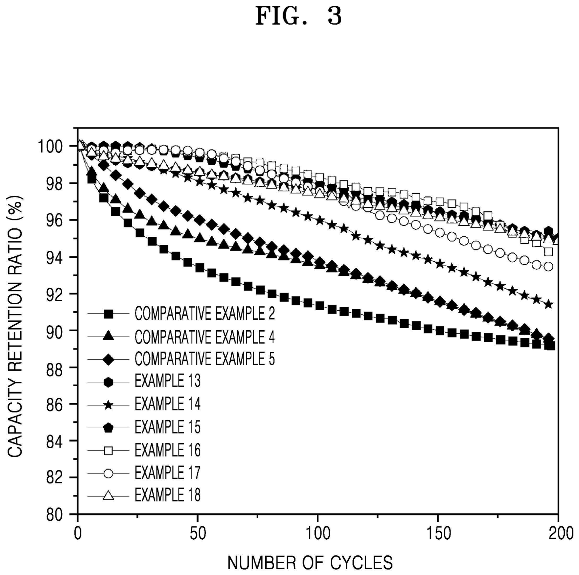

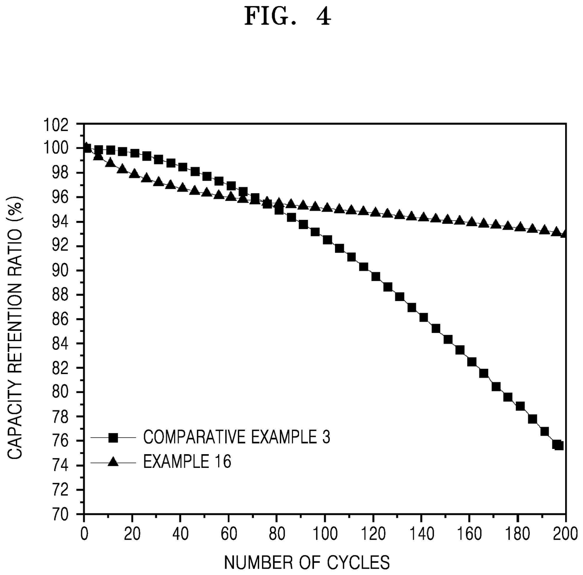

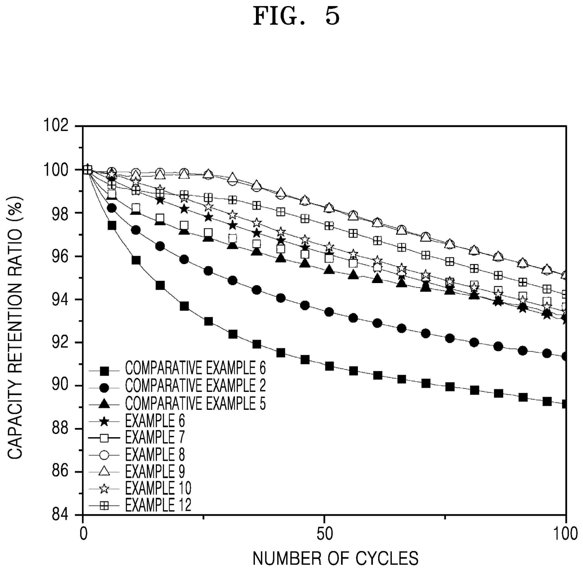

As shown in Table 2 and FIGS. 2 and 5, repeated charge/discharge cycles at 25 °C confirmed that the Examples using the compound of the present disclosure as an additive had superior room-temperature cycle life compared to the Comparative Examples. Furthermore, as shown in Table 2 and FIGS. 3 and 4, it was confirmed that a combination with vinylene carbonate (VC) and the lithium salt (LiPO₂F₂) additive provided a further increase in cycle life compared to when the compound was used alone.

### <Experimental Example 2> Evaluation of Resistance Improvement Performance

The batteries prepared according to the Examples were charged to 4.2 V at 1.0 C and then discharged to SOC50, after which the initial DC internal resistance (DC-IR) was measured by discharging for 10 seconds at four different C-rates (0.5, 1, 2, and 3 C), respectively. After charging to 4.2 V at 1.0 C and then performing 200 charge/discharge cycles at room temperature, the DC-IR was measured in the same manner as the initial DC-IR measurement method, and the results are shown in Table 3, expressed as a percentage increase from the initial DC-IR.

**[Table 3]**

| Item | Initial Discharge Resistance (Initial DC-IR, Ω) | Discharge Resistance after 200 cycles (DC-IR after 200 charge/discharge cycles, Ω) | DC-IR Increase Rate (%) |
|---|---|---|---|
| Comparative Example 1 | 13.7 | 23.3 | 70.1 |
| Comparative Example 2 | 13.5 | 22.8 | 68.9 |
| Comparative Example 3 | 12.9 | 22.3 | 72.9 |
| Comparative Example 4 | 13.7 | 22.1 | 61.3 |
| Comparative Example 5 | 14.4 | 25.2 | 75.0 |
| Example 1 | 13.0 | 20.7 | 59.2 |
| Example 2 | 13.9 | 19.3 | 38.8 |
| Example 3 | 13.7 | 20.5 | 49.6 |
| Example 4 | 13.8 | 20.3 | 47.1 |
| Example 11 | 17.0 | 25.8 | 51.8 |
| Example 13 | 15.1 | 20.7 | 37.1 |
| Example 14 | 15.2 | 20.9 | 37.5 |
| Example 15 | 14.8 | 20.3 | 37.2 |
| Example 16 | 14.7 | 20.5 | 39.5 |
| Example 17 | 15.0 | 18.4 | 22.7 |
| Example 18 | 15.7 | 18.8 | 19.7 |
| Example 19 | 17.1 | 22.0 | 28.7 |

As shown in Table 3, in Examples using the compound prepared according to the present disclosure, despite the initial discharge resistance value being higher than that of Comparative Examples, the discharge resistance after 200 charge/discharge cycles showed a trend of being lower than that of Comparative Examples. That is, it was confirmed that the DC-IR increase rate was lower than that of Comparative Examples.

This confirms that the compound prepared according to the present disclosure forms a film that facilitates lithium-ion movement, as evidenced by the low resistance increase rate. In particular, it was confirmed that the DC-IR increase rate was markedly reduced when the compound was combined with vinylene carbonate (VC) and the lithium salt (LiPO₂F₂) additive.

The foregoing description of the present disclosure is for illustrative purposes, and it will be understood by those of ordinary skill in the art to which the present disclosure pertains that the present disclosure can be easily modified into other specific forms without changing its technical spirit or essential features. Therefore, the examples described above should be understood as being illustrative in all aspects and not limiting. For example, each component described as a single unit may be implemented in a distributed manner, and likewise, components described as being distributed may be implemented in a combined form.

The scope of the present disclosure is indicated by the appended claims, and all changes or modified forms derived from the meaning and scope of the claims and their equivalent concepts should be construed as being included in the scope of the present disclosure.

## Claims

1. An electrolyte solution for a secondary battery, comprising a compound represented by Formula 1, or an isomer thereof: 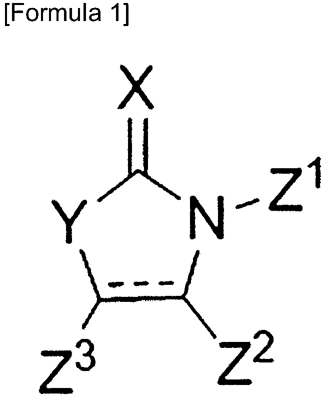
wherein, in Formula 1, carbon in the ring is linked by a single bond or a double bond;
X is oxygen or sulfur;
Y is oxygen or sulfur;
Z¹, Z², and Z³ are each independently selected from the group consisting of hydrogen, substituted or unsubstituted C₁₋₁₀ alkyl, substituted or unsubstituted C₁₋₁₀ alkenyl, substituted or unsubstituted C₁₋₁₀ amine, substituted or unsubstituted C₁₋₁₀ acyl, substituted or unsubstituted C₁₋₁₀ alkynyl, substituted or unsubstituted C₃₋₁₀ cycloalkyl, substituted or unsubstituted silyl, substituted or unsubstituted C₁₋₁₀ alkoxy, substituted or unsubstituted C₁₋₁₂ heteroalkyl, substituted or unsubstituted C₁₋₆ heterocycloalkyl, -SO₂R¹, -P(=G)(OR¹)₂, and -P(=G)(R¹)₂; Z¹ and Z² are optionally bonded to each other to form a ring; G is oxygen or sulfur; and
R¹ is substituted or unsubstituted C₁₋₆ alkyl, C₂₋₆ alkenyl, C₂₋₆ alkynyl, or C₆₋₂₀ aryl.

2. The electrolyte solution for a secondary battery of claim 1,
wherein Z¹ is each independently selected from the group consisting of hydrogen, substituted or unsubstituted C₁₋₁₀ alkyl, substituted or unsubstituted C₁₋₁₀ alkenyl, substituted or unsubstituted C₁₋₁₀ amine, substituted or unsubstituted C₁₋₁₀ acyl, substituted or unsubstituted C₁₋₁₀ alkynyl, substituted or unsubstituted C₃₋₁₀ cycloalkyl, substituted or unsubstituted silyl, - SO₂R¹, and -P(=G)(OR¹)₂,
R¹ and G are as defined in claim 1, and
Z² and Z³ are each independently selected from the group consisting of hydrogen, substituted or unsubstituted C₁₋₁₀ alkyl, substituted or unsubstituted C₁₋₁₀ alkenyl, substituted or unsubstituted C₁₋₁₀ alkoxy, and substituted or unsubstituted C₁₋₁₂ heteroalkyl.

3. The electrolyte solution for a secondary battery of claim 1,
wherein Z¹ is each independently selected from the group consisting of hydrogen, substituted or unsubstituted C₁₋₁₀ alkenyl, substituted or unsubstituted C₁₋₁₀ acyl, substituted or unsubstituted C₁₋₁₀ alkynyl, and -SO₂R¹,
R' is as defined in claim 1, and
Z² and Z³ are each independently selected from the group consisting of hydrogen and substituted or unsubstituted C₁₋₁₀ alkyl.

4. The electrolyte solution for a secondary battery of claim 1,
wherein the substituted alkyl, alkenyl, amine, acyl, alkynyl, cycloalkyl, silyl, alkoxy, heteroalkyl, and heterocycloalkyl are each independently substituted with one or more substituents selected from the group consisting of alkoxy group, alkynyloxy group, heteroaryl group, alkenyl group, heterocycloalkyl group, carbonyl group, halogen group, hydroxyl group, alkenyloxy group, carboxyl group, carbonate group, alkyl group, alkynyl group, amine group, cycloalkyl group, silyl group, sulfonate group, phosphate group, thiophosphate group, nitro group, cyano group, heteroalkyl group, cycloalkyl group, aryl group, and ether group.

5. The electrolyte solution for a secondary battery of claim 1,
wherein the electrolyte solution further comprises one or more additives selected from the group consisting of LiPO₂F₂, unsaturated cyclic carbonate, cyclic sultone, cyclic sulfate lactone, and nitrile compound.

6. The electrolyte solution for a secondary battery of claim 5,
wherein the unsaturated cyclic carbonate is selected from the group consisting of vinylene carbonate, phenyl carbonate, vinyl carbonate, and allyl carbonate.

7. The electrolyte solution for a secondary battery of claim 1,
wherein the electrolyte solution for a secondary battery comprises at least one compound selected from the group represented by the following formulas, or an isomer thereof:

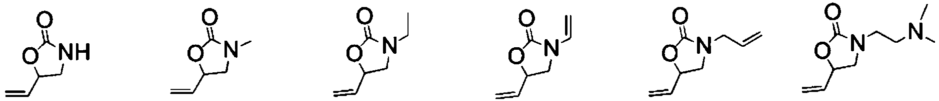

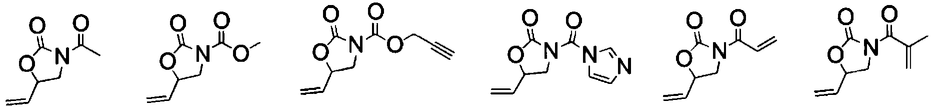

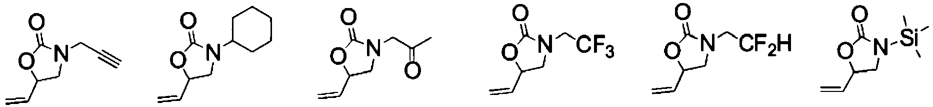

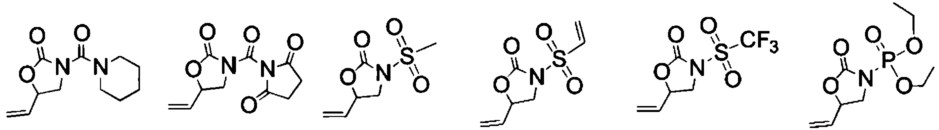

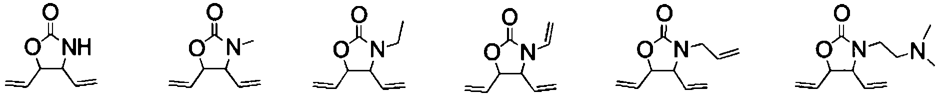

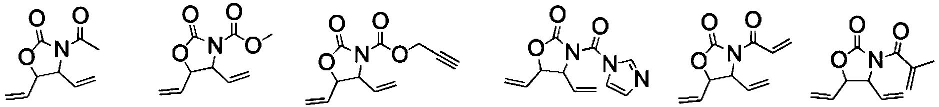

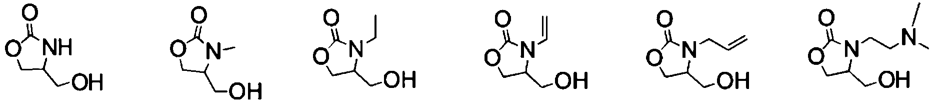

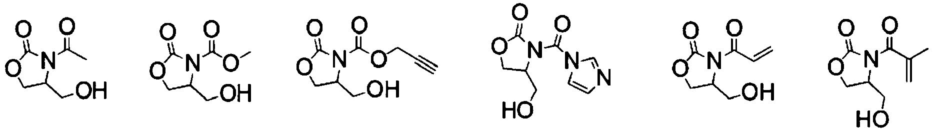

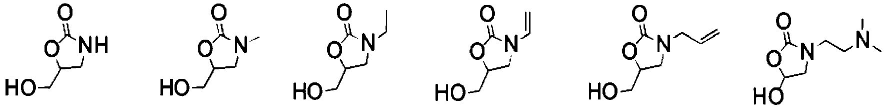

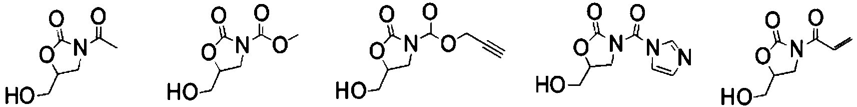

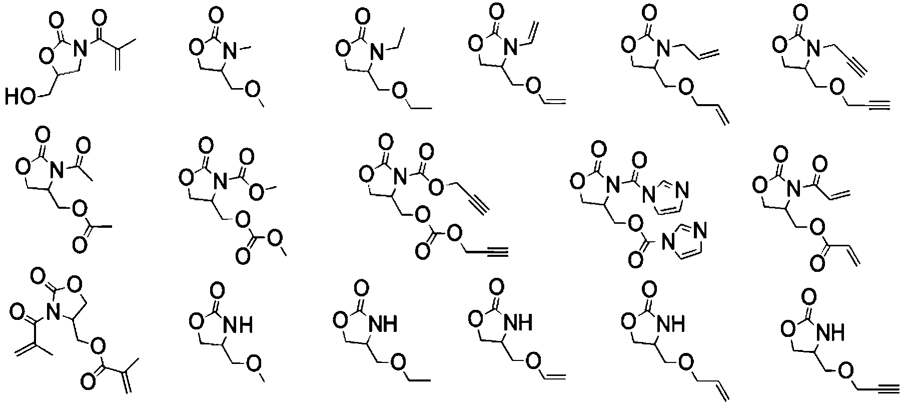

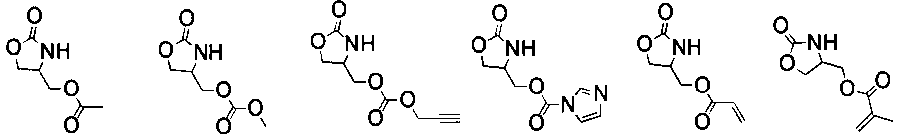

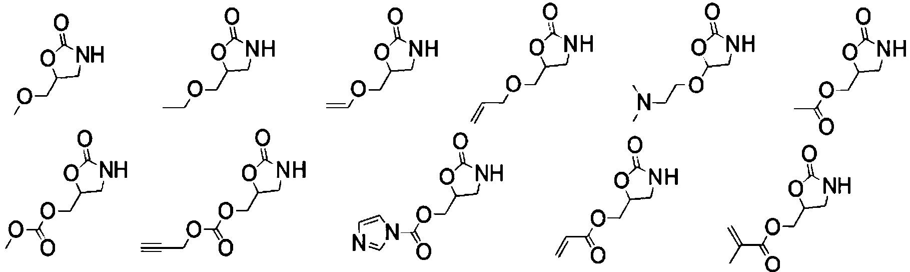

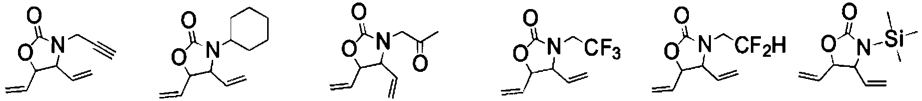

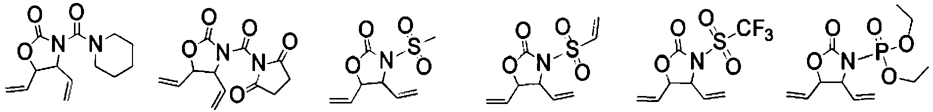

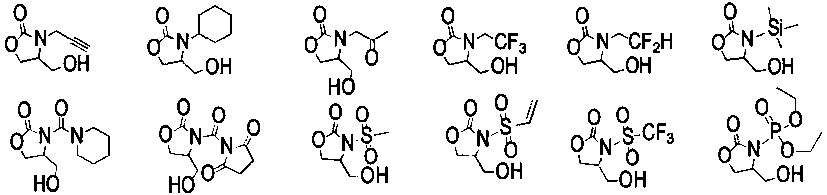

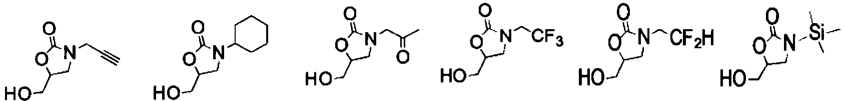

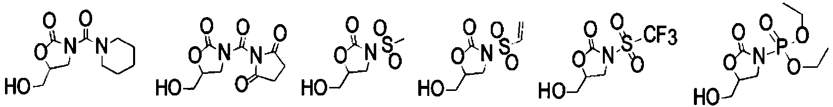

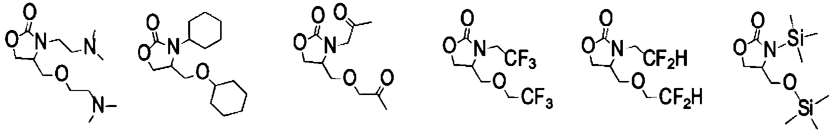

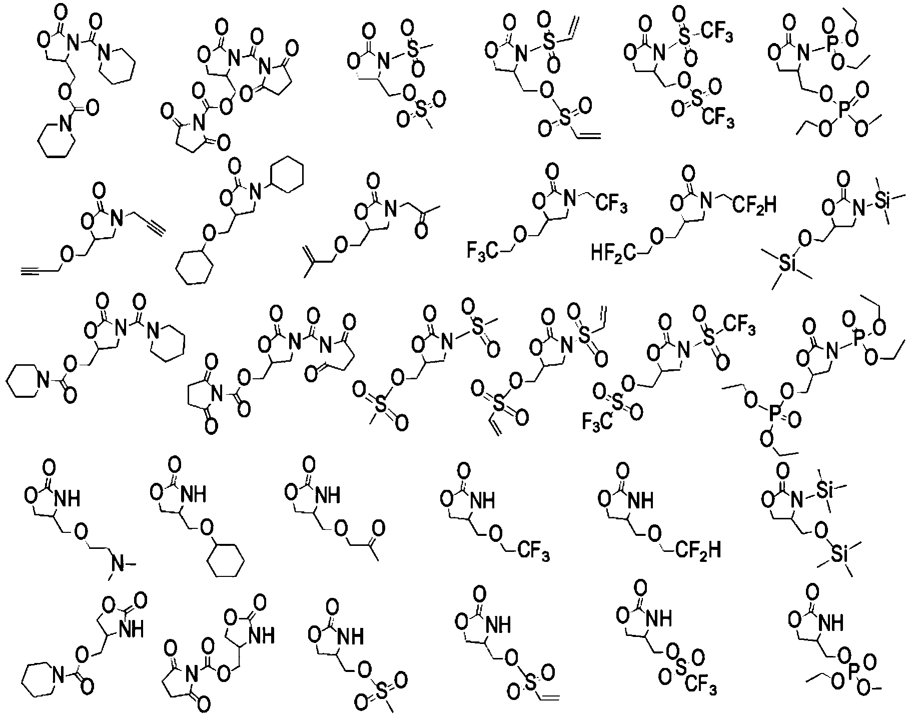

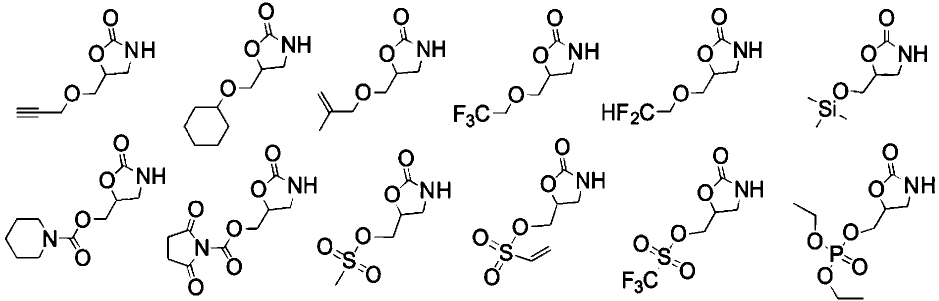

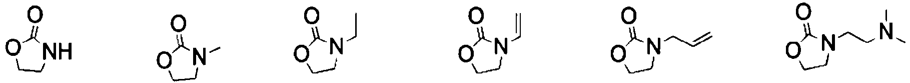

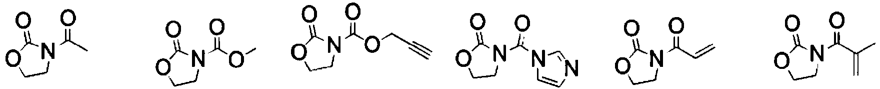

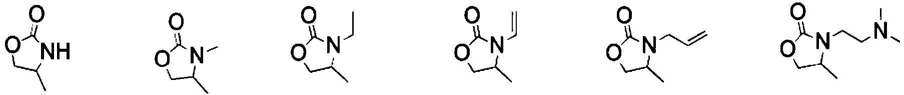

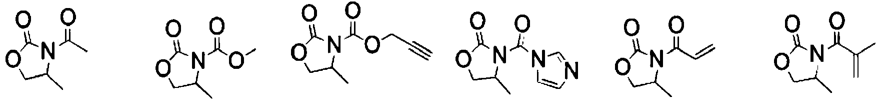

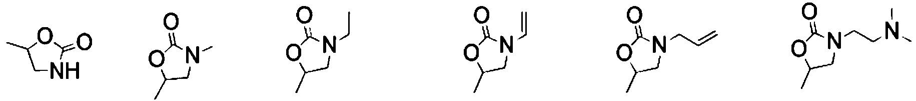

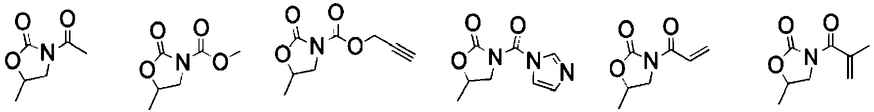

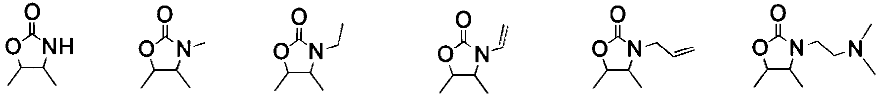

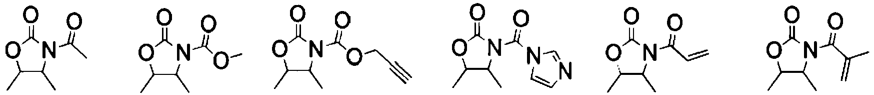

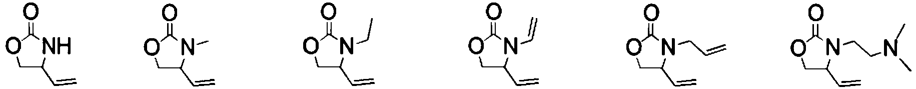

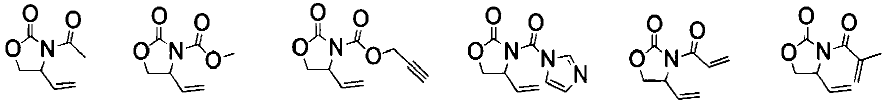

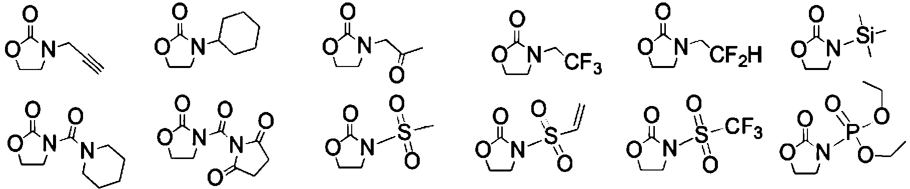

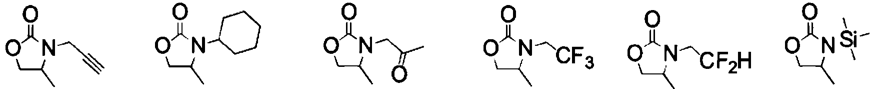

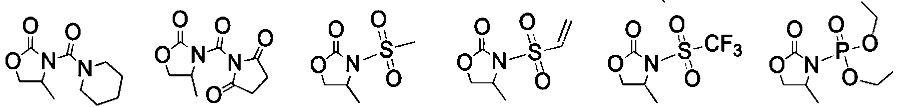

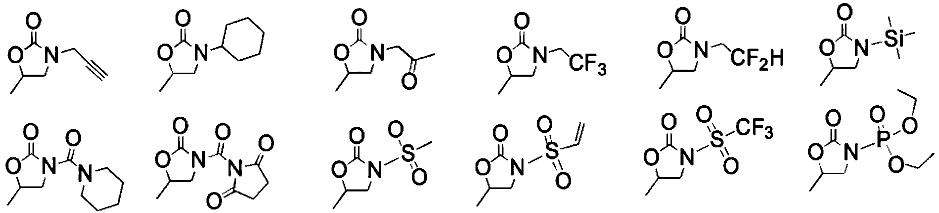

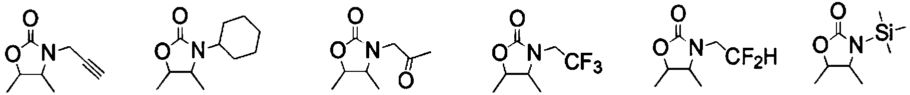

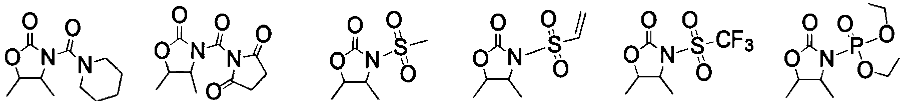

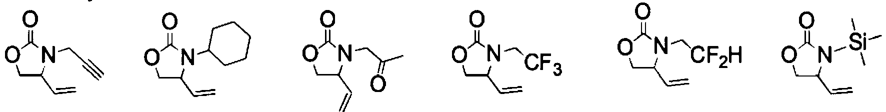

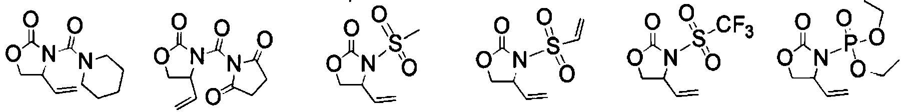

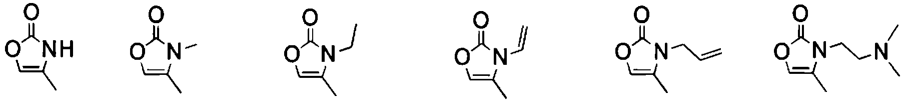

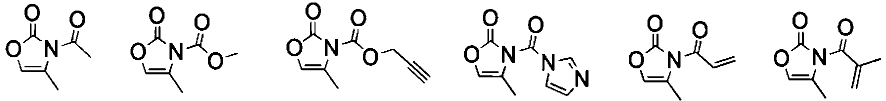

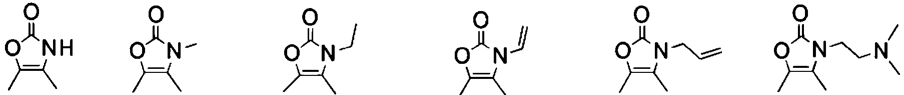

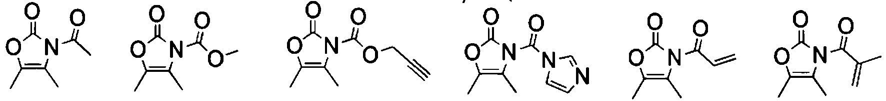

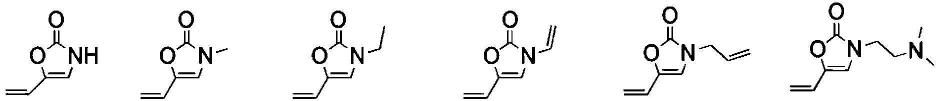

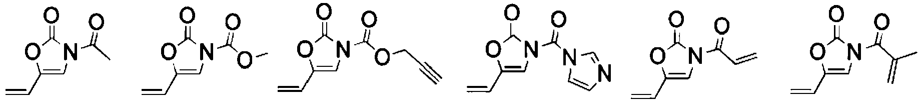

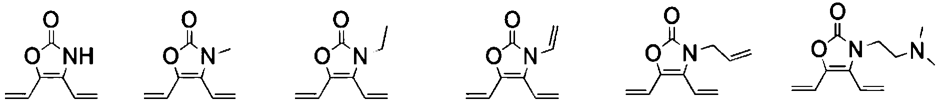

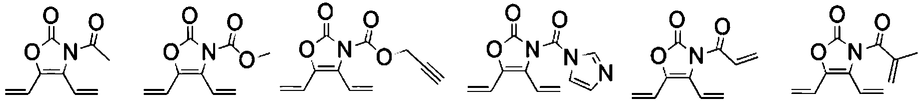

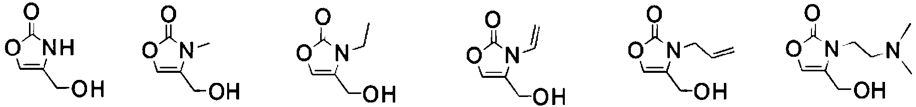

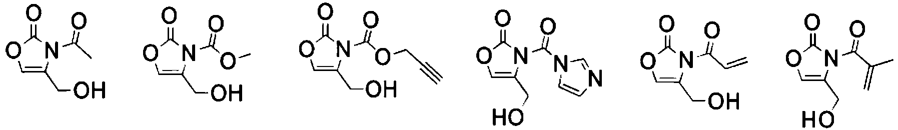

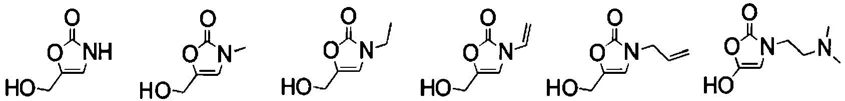

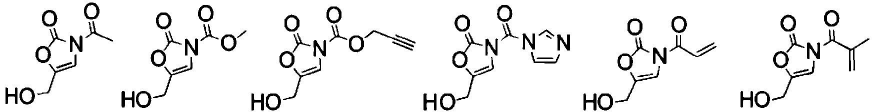

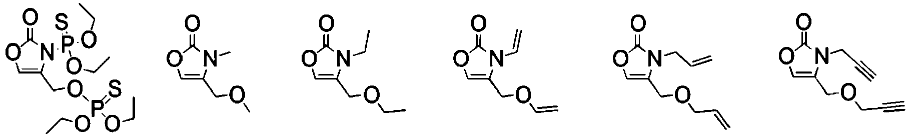

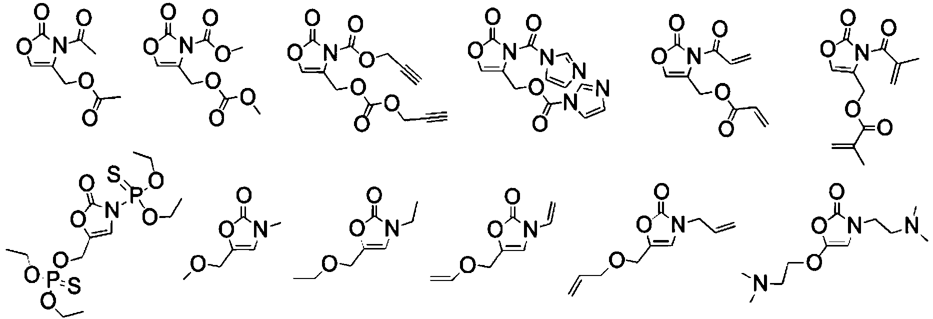

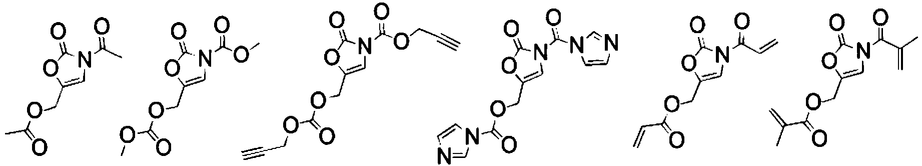

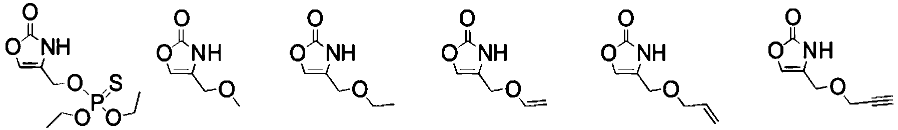

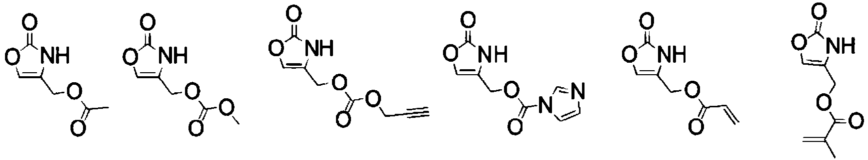

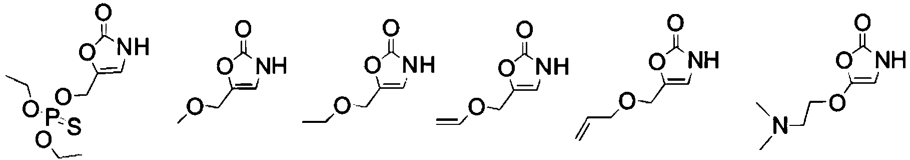

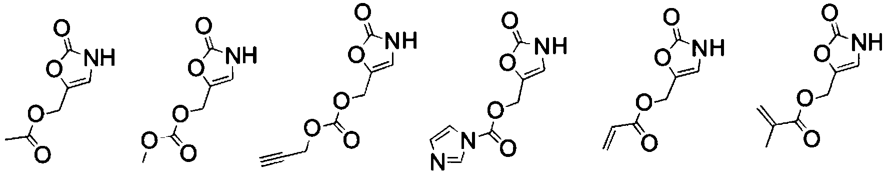

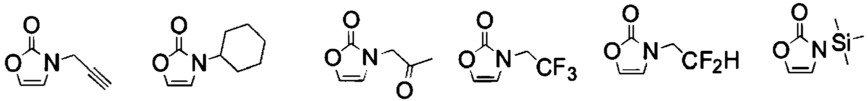

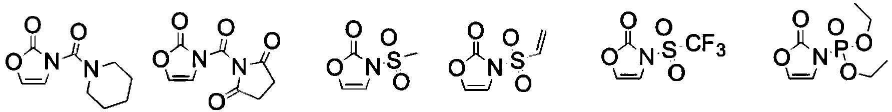

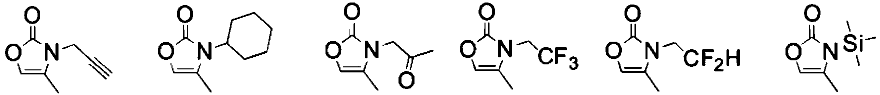

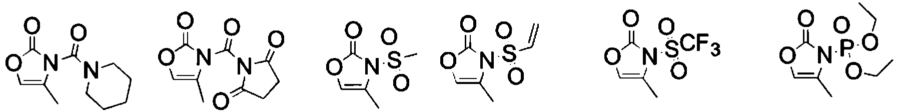

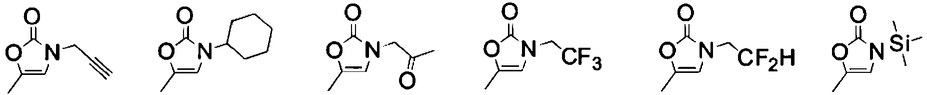

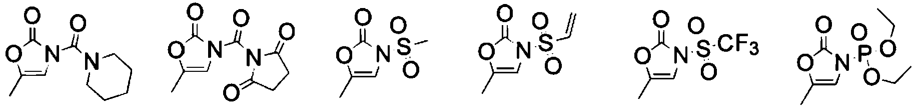

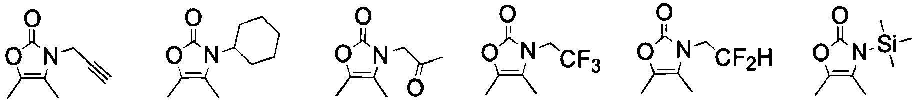

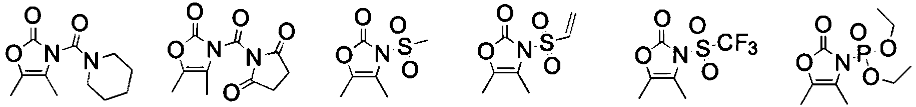

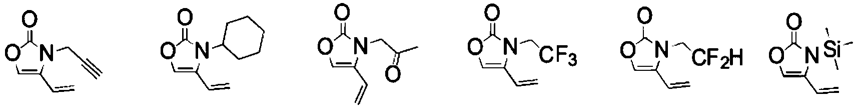

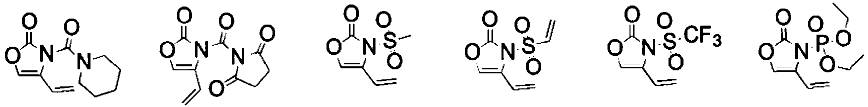

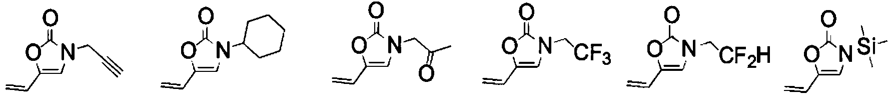

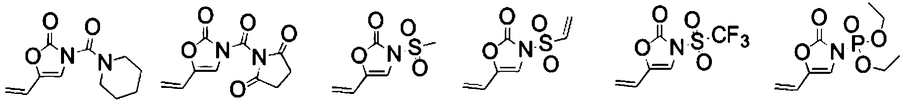

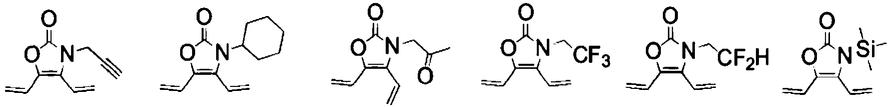

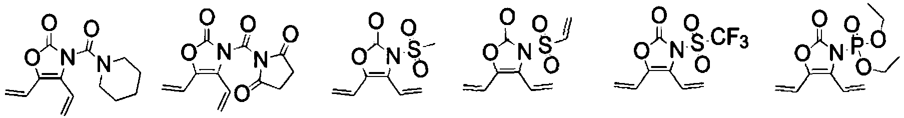

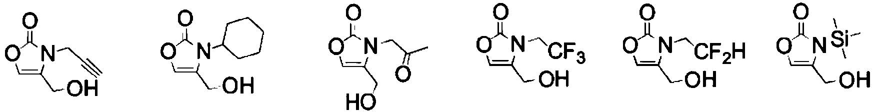

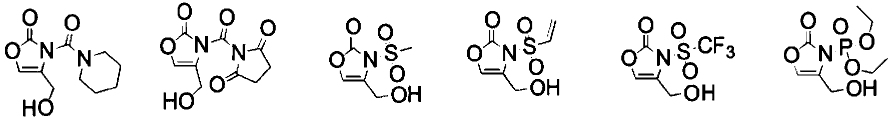

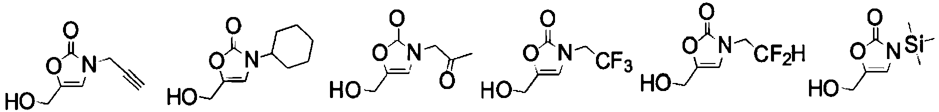

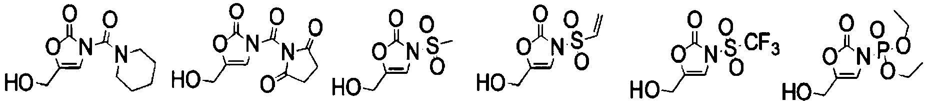

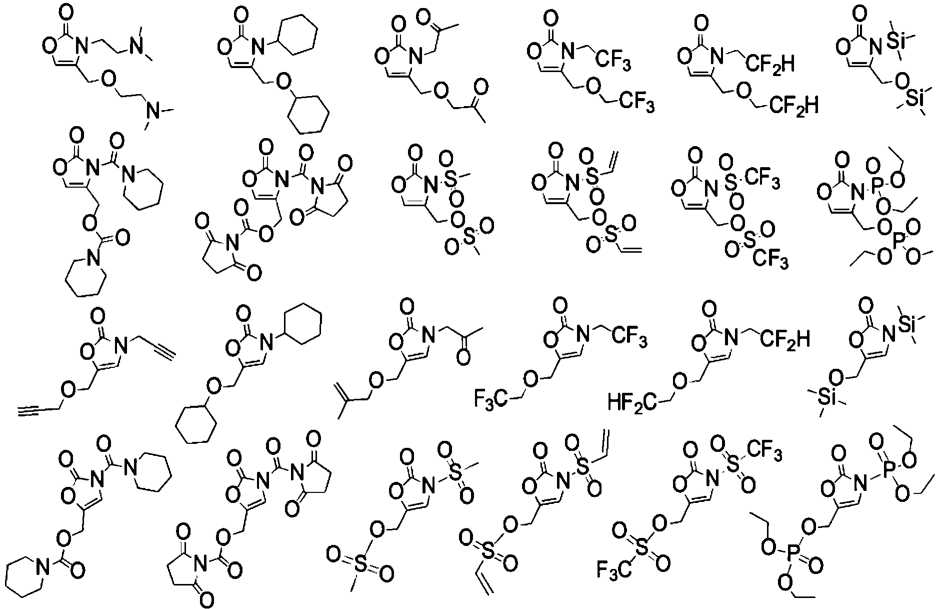

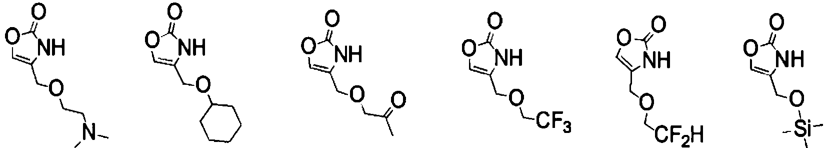

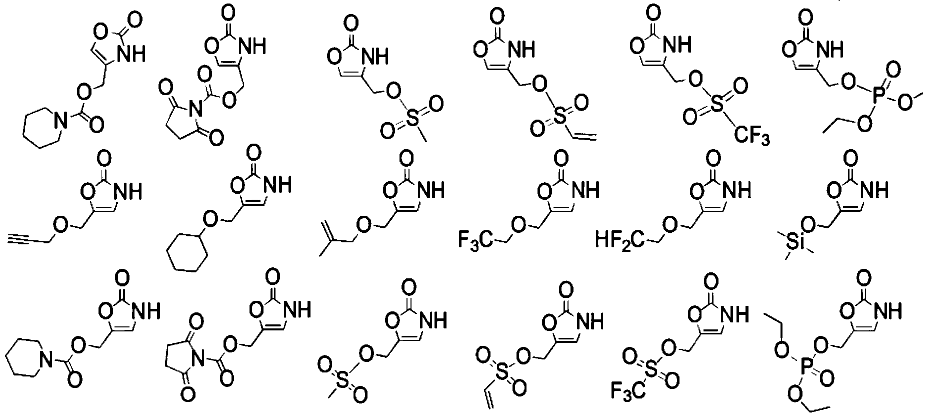

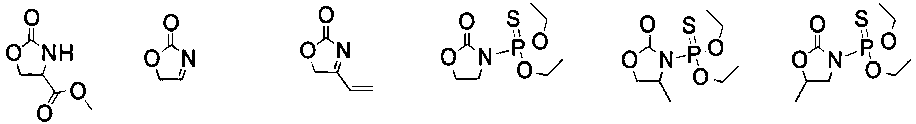

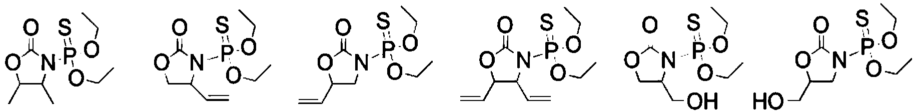

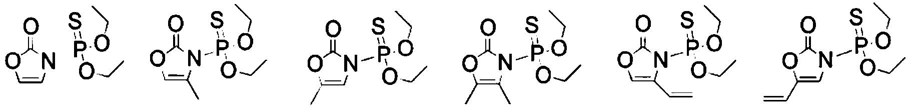

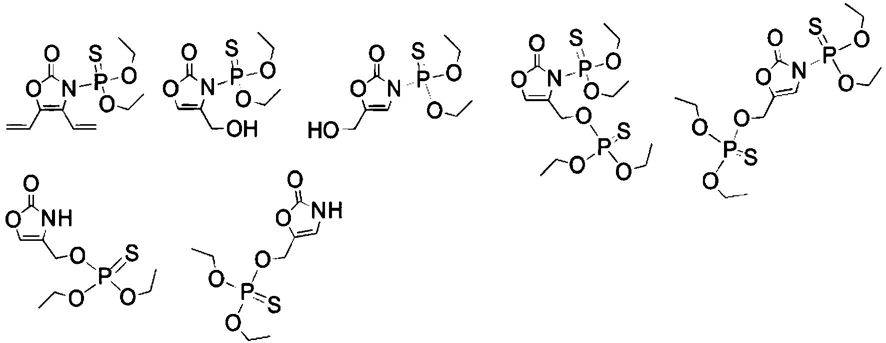

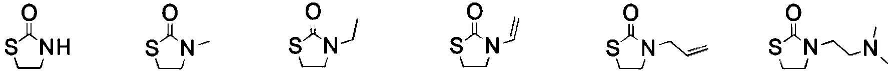

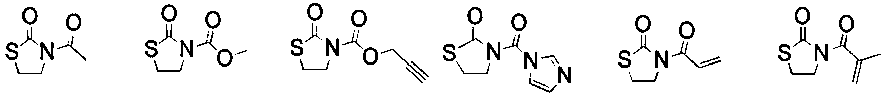

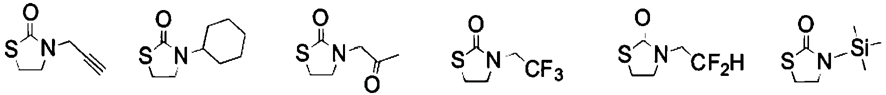

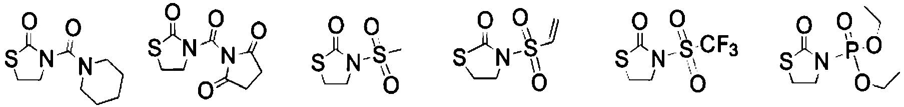

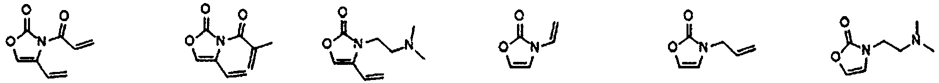

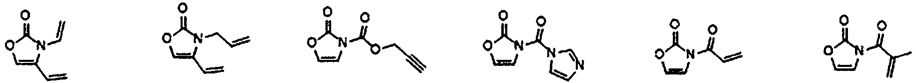

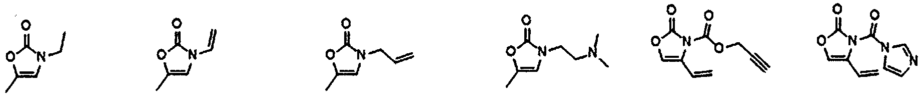

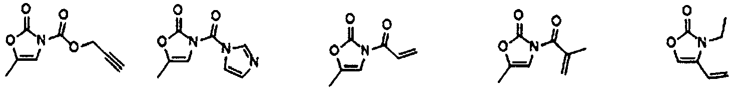

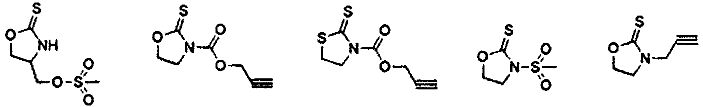

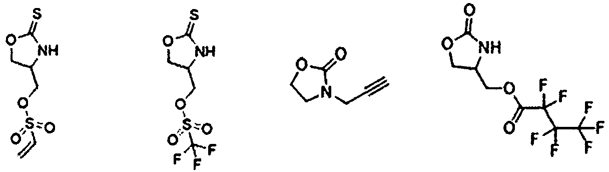

8. The electrolyte solution for a secondary battery of claim 1,
wherein the electrolyte solution further comprises an organic solvent.

9. The electrolyte solution for a secondary battery of claim 1,
wherein the compound represented by Formula 1 is provided as an electrolyte solution additive.

10. The electrolyte solution for a secondary battery of claim 1,
wherein the secondary battery is a lithium-ion battery.

11. A secondary battery comprising:
an electrode assembly comprising a cathode, an anode, and a separator separating the cathode and the anode;
a case housing the electrode assembly; and
the electrolyte solution according to claim 1, housed in the case and immersing the electrode assembly.
